# EUROPEAN PATENT APPLICATION

(11) **EP 4 715 684 A1**
(43) Date of publication of application: **25.03.2026**
(21) Application number: 25165627.8
(22) Date of filing: 24.03.2025
(51) Int. Cl.: G06N 5/022, G06N 20/00

(54) **COMPUTER-IMPLEMENTED METHOD AND SYSTEM FOR PROVIDING PERSONALISED USER EXPERIENCE ASSOCIATED WITH A SOFTWARE APPLICATION**

(30) Priority: 19.09.2024 EP 24201378
(71) Applicant: Siemens Aktiengesellschaft, 80333 München (DE)
(72) Inventor: KHARKAR, Nayan, 445304 Yavatmal, Maharashtra (IN); MANICKAM, Ramesh, 560100 Bangalore, Karnataka (IN); SINGH, Saurabh Narayan, 81739 München (DE)
(74) Representative: HKW Intellectual Property PartG mbB

(57) **Abstract**

Disclosed is a method (400) and a system (100) for providing personalised user experiences in a software application (102). The method includes: receiving first data including first application data associated with the software application (102); receiving second data from a knowledge base (110A) comprising second application data pertaining to objects and UI components, persona data, and user interaction data; obtaining active user information, including at least one of persona, objectives, or tasks of one or more active users; determining tasks for each active user by mapping active user information to persona data; identifying elements from the knowledge base (110A) and corresponding coordinates for task realization based on persona and user interaction data; generating metadata for the determined elements and corresponding coordinates; and rendering a personalised user experience by extracting and positioning the elements from the knowledge base (110A) according to the metadata.

## Description

This application claims priority to and the benefit of patent application number EP24201378 titled "SYSTEM AND METHOD FOR GENERATING A SELF-LEARNING KNOWLEDGE BASE FOR A PERSONALISED USER EXPERIENCE FOR USERS INTERACTING WITH A SOFTWARE APPLICATION", filed in the European Patent Office on September 19, 2024. The specification of the above referenced patent application is incorporated herein by reference in its entirety.

The present disclosure generally relates to software applications, and more particularly relates to a computer-implemented method and a system for providing personalised user experience associated with a software application.

A software application refers to any computer and other electronic device-based application, including web-based applications, desktop applications and immersive applications running on mobile devices, headsets and other computer platforms. The software application in this context must have a user-based interaction framework based on which different classes of users communicate with and use the application. In an agile continuous design and development model for software applications, the software design and interaction pattern with the users can be changed and updated every release cycle. Since the users of an application are of different classes and can have different personas, requirements, capabilities and accessibility preferences, a software application must support the different requirements to be more usable and user friendly.

Despite significant advancements in software design, the current state of software design is characterized by limitations that do not fully accommodate the diverse needs of multiple users, resulting in a sub-optimal user experience and a lack of personalization. This is particularly apparent in the way software applications are often designed with a generic user in mind, which may not fully account for the unique characteristics, motivations, and objectives of individual users. Furthermore, despite the adoption of agile delivery mechanisms, which aim to provide flexibility and adaptability in the software development process, the end delivery of software applications often remains relatively inflexible in terms of usability and user experience. The final product is often tied to a predetermined framework, which can limit its ability to adapt to the evolving needs and preferences of users. Consequently, users may need to adapt to the application, rather than the application being tailored to their specific needs.

It is noteworthy that conventional software applications often do not account for the diverse physical and cognitive abilities of end users in their design. For instance, the application interface is typically identical for both right-handed and left-handed users, failing to accommodate the differences in dexterity and handedness that can significantly impact user experience. Similarly, users with varying neurological profiles and preferences are often presented with a standardised application interface that may not be optimized for their individual requirements. For example, a user with a physical disability may require a customized interface that accommodates their specific needs, while a user with a cognitive disability may require a simplified interface that reduces cognitive load. The lack of adaptiveness in current software design has resulted in a lack of inclusivity, leading to a poor user experience for users with diverse needs.

The limitations of current software design are further compounded by the absence of adaptive task management mechanisms, which hinder the ability to dynamically adjust to changing user requirements. Conventional software applications rely on rigid, predefined workflow structures that fail to evolve in response to user interactions, thereby resulting in a lack of flexibility and a suboptimal user experience. A significant limitation of existing software design approaches is the inability to learn from user preferences and dynamically adapt the user interface to create a personalised experience for individual users, while maintaining a consistent overall application experience across the user base. Certain solutions either rely on users to manually customize the interface, which can be time-consuming and overwhelming, or provide a limited set of predefined personas that users can select from, which may not accurately reflect their unique needs and preferences. Although these approaches offer more flexibility than traditional rigid interface approaches, they still fail to deliver a fully adaptive and personalised user experience that caters to the varied needs and preferences of individual users.

The development of adaptive software applications is a complex task that requires a deep understanding of user behaviour, nuanced requirements, and technical complexities. In-depth user persona analysis, comprehensive user behaviour mapping, and nuanced understanding of diverse user requirements are essential for creating adaptive software applications. However, these requirements are often challenging to fulfil, and the complexity of real-time adaptation, maintaining interface consistency, efficient usability testing methodologies, and resource-intensive development processes pose significant obstacles. For instance, the development of adaptive software applications requires a deep understanding of user behaviour, which can be challenging to obtain due to the complexity of human behaviour.

Current mitigation strategies, such as manual persona research and development paradigms, have limitations that can lead to inconsistent user representation, accessibility and usability challenges, and time-consuming customization efforts. Additionally, specific challenges in complex platforms, such as industrial design software and low-code development environments, require innovative solutions that can address the unique requirements of these platforms. For instance, industrial design software requires users to interact with complex systems and interfaces, which can be overwhelming for users with diverse needs. The lack of adaptiveness in current software design can lead to a lack of accessibility and usability.

The implications of these design limitations are significant in immersive three-dimensional digital environments, such as industrial metaverse platforms. Industrial metaverse refers to a virtual, immersive, and interactive computer-simulated environment that simulates real-world industrial settings, processes, and systems, allowing users to interact with digital twins, virtual models, and other simulated entities. These platforms aim to provide an immersive experience, enabling users to engage with complex industrial systems, processes, and data in a more intuitive and interactive manner. However, the lack of adaptiveness and personalization in current software design can lead to a poor user experience, lack of engagement, and decreased productivity.

In metaverse applications, multiple personas coexist, each with their unique motivations, objectives, and requirements. However, current metaverse applications are limited in their ability to accommodate the diverse needs of these personas, as they typically host tasks and workflows that are tied to predefined objectives. A critical technical challenge exists in providing personalised user experiences that dynamically adapt to different users and their evolving requirements. Current metaverse platforms operate with rigid frameworks that fail to effectively accommodate diverse user needs and preferences, resulting in standardized interfaces that may not align with individual user objectives or interaction patterns. Additionally, these platforms lack the capability for real-time adaptation of environmental elements (3D objects) and user interface (UI) components based on individual user needs, resulting in suboptimal user experiences.

Moreover, the technical complexity of establishing and managing dynamic relationships between users and virtual elements in metaverse applications presents significant challenges. Current metaverse platforms predominantly utilize static, predefined templates and require extensive manual configuration for any modifications to the virtual environment or the UI elements. This reliance on manual processes introduces substantial technical overhead and can also reduce system efficiency and create bottlenecks in the development pipeline. The absence of automated mechanisms for adapting virtual environments based on user context and preferences necessitates repetitive engineering efforts, increases development costs, and results in extended time-to-market for new features. Users are required to navigate through standardized interfaces that may not align with their specific needs or preferences, potentially leading to increased cognitive load, reduced productivity, and diminished engagement. These challenges are exacerbated in enterprise scenarios where multiple users with diverse requirements need to interact efficiently within the same virtual environment to achieve their corresponding tasks.

In summary, current software applications, such as industrial metaverse applications, exhibit several critical technical limitations. These limitations include: (i) the absence of mechanisms for real-time adaptation of user interface components and application elements in response to individual user needs; (ii) the inability to establish and manage dynamic relationships between users and application features; (iii) the lack of automated systems for personalizing user experiences based on individual user context, preferences, and/or needs; and (iv) the reliance on manual configuration processes for interface modifications. These technical drawbacks collectively result in rigid, predefined frameworks that fail to accommodate diverse user needs, necessitate extensive manual intervention, and create significant development overhead.

In light of the above, there exists a need in the art to address, mitigate, or overcome at least in part the aforementioned limitations and challenges.

Accordingly, it is an object of the present disclosure to provide a system and a computer-implemented method for providing personalised user experience associated with a software application. Examples of such software applications include industrial metaverse applications, product design applications, Product Lifecycle Management (PLM) applications, configuration and commissioning applications, and low-code development applications, among others that require user interaction and engagement.

The object of the present disclosure is achieved by a computer-implemented method for providing personalised user experience associated with a software application. The method comprises receiving, by one or more processing units, first data associated with the software application, comprising first application data. The method comprises receiving second data from a knowledge base communicably coupled to the one or more processing units. The second data includes: second application data associated with one or more source applications, the second application data pertaining to objects, user interface (UI) components, and respective coordinates along with any associated actions thereof; persona data associated with a plurality of user personas and respective objectives and tasks; and user interaction data pertaining to interaction patterns of the plurality of user personas, and relationships therebetween. The method comprises obtaining active user information including at least one of a persona, one or more objectives, one or more tasks, or any combination thereof associated with each of one or more active users interacting with the software application. The method comprises determining one or more tasks to be performed by each active user to achieve the one or more objectives of the respective persona of each active user, by mapping the active user information with the persona data in the knowledge base. The method comprises determining, for each active user, one or more elements from the knowledge base for realization of the corresponding determined one or more tasks, and coordinates of said one or more elements based on a mapping of the persona of the corresponding active user with the user interaction data. The one or more elements correspond to at least one of objects or UI components in the knowledge base. The method comprises generating metadata for each active user, the metadata pertaining to said determined one or more elements and coordinates thereof. The method comprises rendering a personalised user experience for each active user by extracting the corresponding determined one or more elements from the knowledge base and positioning said one or more elements according to the corresponding metadata.

Aspects, exemplary embodiments and implementations of the present disclosure will now be described in further detail. It should be understood that the following descriptions are provided for explanatory purposes only and are not intended to limit the scope of the disclosure.

The embodiments disclosed herein involve or relate to artificial intelligence (AI). AI generally encompasses the use of computerized tools and techniques, such as machine learning, to perceive, synthesize, infer, predict, and/or generate information. AI systems typically rely on a combination of hardware and software components as a foundation for rapidly performing complex operations. These systems may utilize one or more models, which have a particular configuration defined by various parameters and the relationships between the parameters. While an initial model configuration may be established, the models can adapt and improve their capabilities over time by learning from input data, such as training data. For example, a dataset may be provided as input to a model, which then produces an output based on the dataset and its current model configuration. Subsequently, the model may receive additional information, such as validation data, reference data, or feedback, and automatically adjust its internal configuration to enhance the quality of the output. The synergistic combination of powerful model parameters and sufficiently large datasets, coupled with high-performance hardware, enables the creation of advanced AI models. These advanced models allow AI systems to interpret and process vast amounts of information in ways that would be impractical, if not impossible, for human beings to accomplish manually.

One aspect of the present disclosure pertains to a computer-implemented method for providing personalised user experience associated with a software application. The method involves receiving, by one or more processing units, first data associated with the software application, comprising first application data. The first application data may include data elements pertaining to objects, UI components, and respective coordinates along with any associated actions thereof.

The method involves receiving second data from a knowledge base communicably coupled to the one or more processing units. The second data includes second application data associated with one or more source applications. According to an embodiment, the one or more source applications includes the software application. The second application data pertains to objects, user interface (UI) components, and respective coordinates along with any associated actions thereof; persona data associated with a plurality of user personas and respective objectives and tasks, and user interaction data pertaining to interaction patterns of the plurality of user personas, and relationships therebetween. The interaction patterns in the user interaction data may correspond to habitual user behaviours and preferences in navigating and interacting with elements displayed over a user interface.

According to an embodiment, the first data and the second data correspond to simulated data acquired from computer-simulated environments, such as but not limited to metaverse applications.

According to an embodiment, the objects may be at least one of two-dimensional (2D) or three-dimensional (3D) objects. The objects may be configured to form part of spatial compositions that comprise at least one of two-dimensional (2D) compositions or three-dimensional (3D) compositions.

Considering an example of an industrial metaverse software application, the 2D objects may include physical objects such as placards, sheets, or display screens, which may be used to convey information or provide visual cues in an industrial setting, such as a factory floor. For example, in an industrial metaverse application simulating a machine shop, 2D objects may include digital representations of safety placards, instructional sheets, or display screens providing real-time data on machine performance. The 3D objects may include digital twins of physical equipment or machinery, such as lathes, milling machines, drilling machines, or other industrial apparatus. These digital twins may be designed to accurately replicate the appearance, functionality, and behaviour of their real-world counterparts, allowing users to interact with them in a simulated environment. The digital twins may also be configured to receive and respond to real-time data from their physical counterparts, enabling a high degree of synchronisation and accuracy.

In the example, the objects may be configured to form part of spatial compositions that comprise at least one of 2D compositions or 3D compositions. The 2D compositions may include arrangements of 2D objects, such as layouts of placards, sheets, or display screens, which may be used to provide visual information or context to users. For example, a 2D composition may comprise a digital representation of a factory floor layout, including the placement of safety placards, instructional sheets, and display screens. The 3D compositions may include arrangements of 3D objects, such as layouts of machinery or equipment, which may be used to simulate real-world industrial environments. For example, a 3D composition may comprise a digital representation of a machine shop, including the placement of digital twins of lathes, milling machines, drilling machines, and other industrial apparatus. The 3D composition may also include spatial relationships between objects, such as the proximity of machinery to each other or to other objects in the environment.

According to an embodiment, the method further includes merging the first data with the second data in the knowledge base to obtain a union data set. The union data set includes union application data pertaining to objects and user interface (UI) components, and respective coordinates along with any associated actions of the said objects and the said UI components.

According to a further embodiment, prior to merging the first data with the second data, the method involves comparing the first application data with the second application data to identify data elements in the first application data that are absent in the second application data. In this embodiment, merging the first data with the second data corresponds to merging the data elements in the first application data that are absent in the second application data.

According to an embodiment, the data elements in the union data set in the knowledge base may be labelled using a data labelling model. The data labelling model being trained on previously labelled data comprising objects, UI components, personas, and relationships therebetween.

The method involves obtaining active user information including at least one of a persona, one or more objectives, one or more tasks, or any combination thereof associated with each of one or more active users interacting with the software application.

According to an embodiment, obtaining active user information may involve determining, using an attribution model, at least one of the persona, the one or more objectives, or the one or more tasks of the persona of each active user based on corresponding user-interaction data associated with the software application. Alternatively, or in addition, obtaining active user information may involve receiving a selection from each active user, wherein the said selection corresponds to a selection of at least one of the persona, the one or more objectives, or the one or more tasks from one or more predefined lists.

In a further embodiment, the attribution model may be a first machine learning model trained on previously labelled data pertaining to associations of user personas of the plurality of users with corresponding user interaction patterns. This allows the attribution model to learn patterns and relationships between user personas and their interaction behaviours, enabling accurate determination of active user information.

The method involves determining one or more tasks to be performed by each active user to achieve the one or more objectives of the respective persona of each active user, by mapping the active user information with the persona data in the knowledge base.

In an embodiment, determining the one or more tasks to be performed to achieve the one or more objectives of the persona of each active user may comprise performing semantic mapping, using a semantic contextualisation model, to correlate the active user information with the persona data in the knowledge base. The semantic contextualisation model may be a machine learning model, such as a neural network or a graph-based model, trained on a large dataset of user interactions, personas, and objectives. This model may be designed to capture complex relationships and nuances between user context, persona characteristics, and task requirements, enabling accurate and effective task determination. The model may also be trained to learn from feedback and adapt to evolving user behaviours and preferences, ensuring that the task determination process remains accurate and relevant over time.

The method involves determining, for each active user, one or more elements from the knowledge base for realization of the corresponding determined one or more tasks, and coordinates of said one or more elements based on a mapping of the persona of the corresponding active user with the user interaction data in the knowledge base. The said one or more elements correspond to at least one of objects or UI components in the knowledge base.

In an embodiment, for each active user, the one or more elements from the knowledge base for realization of the corresponding determined one or more tasks and the coordinates of said one or more elements for user accessibility may be determined using one or more contextual intelligence models. These models may be machine learning models trained on a variety of data sources, including node learning data for identifying objects, UI components, and respective coordinates in the knowledge base; actions learning data for analysing actions and behaviours associated with the objects and UI components; interaction data for identifying user behaviour with the software application, such as user input methods, interaction patterns, and feedback; design comprehension data for identifying UI elements and design structures associated with UI components; first contextual understanding data for identifying contextual information associated with UI components, including design choices, interactions, relative positions, and correlations; and second contextual understanding data for analysing event logs, object interactivity records, and temporal and spatial relationships between objects and UI components. Advantageously, this approach enables the provision of highly personalised and adaptive user interfaces, which can significantly enhance user experience, improve productivity, and reduce cognitive load, while also allowing for more efficient and effective use of the software application.

The method involves generating metadata for each active user. The metadata pertains to the said determined one or more elements and coordinates of the one or more elements. The method involves rendering a personalised user experience for each active user by extracting the corresponding determined one or more elements from the knowledge base and positioning said one or more elements according to the corresponding metadata.

In an embodiment, rendering a personalised user experience for each active user may comprise generating a customized layout and arrangement of the objects and the UI components from the knowledge base corresponding to the respective metadata, based on user interaction patterns and preferences of the persona of the corresponding active user during an active user session with the software application. This customized layout and arrangement can be tailored to meet the unique needs and preferences of each active user, providing an optimized and intuitive user experience. Advantageously, this approach enables increased user engagement, improved productivity, and enhanced overall satisfaction with the software application, while also reducing the likelihood of user frustration and errors. The personalised user experience can also foster a sense of familiarity and comfort, leading to increased user loyalty and retention.

According to an embodiment, the computer-implemented method may further involve identifying, by the one or more processing units, one or more new user personas based on interaction patterns of the one or more active users. Additionally, the method may include updating, by the one or more processing units, the one or more new user personas in the persona data and the corresponding interaction patterns in the user-interaction data in the knowledge base. Advantageously, this approach enables the software application to continuously learn and adapt to evolving user behaviours and preferences, ensuring that the personalised user experiences remain accurate and effective over time. The ability to identify new user personas and update the knowledge base accordingly also allows for improved scalability and flexibility, enabling the software application to accommodate a diverse range of users and use cases. Furthermore, this approach can lead to enhanced overall user satisfaction and engagement with the software application, as users are provided with more accurate and personalised experiences.

According to an embodiment, the computer-implemented method may further comprise utilizing a deployment and synchronisation engine to manage distribution and alignment of a plurality of personalised views on individual user devices when multiple active users are simultaneously interacting with the software application, based on mapped correlations between the persona of each active user and the user interaction data stored in the knowledge base. The deployment and synchronisation engine may also synchronize user interactions and dynamic changes across the plurality of personalised views, thereby maintaining consistency in application state and user data associated with the software application.

Advantageously, this embodiment enables seamless and efficient management of multiple personalised views, ensuring that each user active receives a consistent and accurate representation of the application state and user data. By leveraging the mapped correlations between the user personas and the user interaction data, the deployment and synchronisation engine can optimize the distribution of personalised views, reducing latency and improving overall system responsiveness. Furthermore, the synchronisation of user interactions and dynamic changes across multiple views ensures that the application state and user data remain coherent and up to date, thereby preventing data inconsistencies and errors that can arise from concurrent user interactions.

Another aspect of the present disclosure relates to a system for providing personalised user experience associated with a software application. The system comprises one or more storage units for storing a knowledge base, one or more processing units communicably coupled to the one or more storage units, and a memory communicatively coupled to the one or more processing units. The memory comprises one or more modules stored in the form of machine-readable instructions executable by the one or more processing units, wherein the one or more modules are configured to perform the aforementioned method steps.

In an embodiment, the system may be implemented as a standalone device or as a distributed system, with the one or more storage units, one or more processing units, and memory being located on one or more devices. The system may also be implemented as a cloud-based system, with the one or more storage units, one or more processing units, and memory being located on one or more cloud servers.

According to yet another aspect of the present disclosure, a computer-program product is provided. The computer-program product has machine-readable instructions stored therein, that when executed by one or more processing units, cause the one or more processing units to perform the aforementioned method steps.

According to yet another aspect of the present disclosure, a computer-readable medium is provided. The computer-readable medium has program code sections of a computer program saved therein. The program code sections are loadable into and/or executable in a system to make the system execute the aforementioned method steps when the program code sections are executed in the system.

In an embodiment, the computer-readable medium may be a non-transitory storage medium, such as a hard disk drive, a solid-state drive, a flash drive, a compact disc (CD), a digital versatile disc (DVD), and the like. Across some embodiments, the computer-readable medium may be a volatile or non-volatile memory. In an embodiment, the program code sections may be stored on the computer-readable medium in a compressed or uncompressed format and may be encoded using various algorithms or protocols to ensure secure and reliable transmission and storage.

Advantageously, the method and system of the present disclosure provide a significant improvement over existing solutions by addressing the limitations and challenges associated with current software design. The method and system of present disclosure enable adaptation of user interface components and application elements in response to individual user needs, establishing and managing dynamic relationships between users and application features, and automating the process of personalizing user experiences based on individual user context, preferences, and needs.

Unlike existing solutions, which are limited by rigid, predefined frameworks that fail to accommodate diverse user needs, the method and system present disclosure provides a flexible and adaptive approach that can dynamically adjust to changing user requirements. This is particularly important in platforms, such as industrial metaverse applications, industrial design software and low-code development environments, where users with diverse needs must interact with complex systems and interfaces. The present disclosure also addresses the lack of inclusivity in current software design, which can result in a poor user experience for users with diverse physical and cognitive abilities. By providing a personalised and adaptive user interface, the present disclosure can accommodate the unique needs and preferences of individual users, including those with physical or cognitive disabilities.

Furthermore, implementation of the method and the system of the present disclosure can overcome the technical complexity of establishing and managing dynamic relationships between users and virtual elements in metaverse applications. The automated mechanisms for adapting virtual environments based on user context and preferences eliminate the need for repetitive engineering efforts, reduce development costs, and result in faster time-to-market for new features.

In addition, the present disclosure provides a scalable and flexible solution that can be applied to a wide range of virtual environments and applications, including industrial metaverse applications, product design applications, and low-code development applications, among others. This enables developers and designers to create more effective and engaging user experiences, while also reducing the time and cost associated with developing and testing adaptive user interfaces.

Moreover, the present disclosure provides a more nuanced and effective adaptation of the user interface, resulting in a more seamless and intuitive user experience. The use of interaction patterns to ensure that the adaptive user interface is consistent with the design system of the virtual environment further enhances the user experience, providing a sense of familiarity and comfort that leads to increased user retention.

Overall, the method and system of the present disclosure provide a significant improvement over existing solutions, enabling increased efficiency, improved user experience, and increased consistency in the adaptive user interface, while also reducing development costs and the risk of human errors while interacting with the software application. By addressing the limitations and challenges associated with current software design, the method and system of the present disclosure provide for a more personalised, user-friendly, and consistent user experience, leading to increased user satisfaction and engagement.

Features which are described herein in the context of separable aspects and embodiments of the disclosure may be used together and/or be interchangeable. Similarly, features described in the context of a single embodiment may also be provided separately or in any suitable sub-combination.

The above-mentioned aspects, features, embodiments, and advantages will become more apparent and understandable with the following description of embodiments of the disclosure in conjunction with the corresponding drawings. The illustrated embodiments are intended to illustrate but not limit the disclosure.

The present disclosure is further described hereinafter with reference to illustrated embodiments shown in the accompanying drawings, in which:
- FIG 1: is a block diagram of a system for providing personalised user experience associated with a software application, in accordance with an exemplary embodiment of the present disclosure;
- FIG 2: is a block diagram of an exemplary architecture for providing personalised user experience associated with the software application, in accordance with an exemplary embodiment of the present disclosure;
- FIG 3: is a schematic diagram illustrating a system architecture for rendering personalised user experiences in a multi-user setup, in accordance with an exemplary embodiment of the present disclosure;
- FIG 4: is a flow diagram of a computer-implemented method for providing personalised user experience associated with the software application, in accordance with an exemplary embodiment of the present disclosure; and
- FIG 5: is a flow diagram illustrating a method for updating new user personas in a knowledge base associated with the software application.

Like reference signs have been used to indicate corresponding or similar elements throughout the drawings. It should be understood that like reference signs may be used to refer to the same or similar elements in different embodiments illustrated in the drawings.

Hereinafter, embodiments for carrying out the present disclosure are described in detail. The various embodiments are described with reference to the accompanying drawings, wherein like reference signs are used to refer to like elements throughout. In the following description, for the purpose of explanation, numerous specific details are set forth in order to provide a thorough understanding of one or more embodiments. It may be evident that such embodiments may be practiced without these specific details.

Throughout the present disclosure, the term "software application" refers to any computing device-based application that interacts directly with the user through an interface and allows users to perform certain tasks based on the visual interface. The computing device can be a computer, a mobile phone, a panel based IoT device or a wearable extended reality peripheral like Virtual Reality (VR) / Augmented Reality (AR) / Mixed Reality (MR) headsets with or without a spatial computer onboard. Web applications are one example of such software applications, desktop applications another. Three-dimensional (3D) and extended reality applications like virtual reality, augmented reality, and mixed reality applications will also fall under the domain of software application.

Throughout the present disclosure, the term "one or more source applications" refers to any computing device-based applications that serve as a source of information for the knowledge base. The one or more source applications are a type of software application that interacts directly with the user through an interface and allows users to perform certain tasks based on the visual interface. The one or more source applications may include, but are not limited to, web applications, desktop applications, three-dimensional (3D) and extended reality applications like virtual reality, augmented reality, and mixed reality applications. These applications may provide data, information, or services that are used to populate the knowledge base and may be used in conjunction with the software application to provide a personalised user experience.

Throughout the present disclosure, the term "application data" refers to a collection of data elements that comprise information pertaining to a software application or one or more source applications. The application data includes, but is not limited to, data elements related to objects, user interface (UI) components, and respective coordinates, as well as any associated actions thereof. The application data may also comprise information, such as metadata, attributes, or properties, that provide context and meaning to the objects, UI components, and coordinates. The application data may be used to describe the structure, layout, and functionality of the software application, including the relationships between different objects and UI components. The data elements in the application data may be represented in various formats, such as numerical, textual, or graphical, and may be stored in a database, file system, or other data storage mechanism. The application data provides a foundation for the system to generate personalised user experiences, by enabling the analysis and processing of user interactions and preferences in the context of the software application.

Throughout the present disclosure, the term "users" may refer to individual actors and stakeholders who interact with the software application to perform various tasks based on the domain, the type of software, and intended outcome. There can be different kinds of users in a software application. For example, an "end user" is the primary individual using the software application to perform designated tasks. For a virtual design system for a factory floor, end users can be the designers who use the system to design the factory, but also the verifiers who look at and approve the design. The purchaser who has ordered the design is another end user in this context. End users can be divided into different categories based on the features and intended tasks. Another example classification of users can be the "power users". Power users are experienced and advanced users who leverage the complex capabilities of a software and embedded workflows that a traditional user might not.

An "active user", as outlined in the present disclosure, pertains to an individual who has successfully logged into the software application and is actively involved in utilizing its features and functionalities during a given period. This designation indicates that the user has completed the authentication process and is presently interacting with the software application, engaging with its interface, accessing data, and performing various tasks within the software environment. The active user status signifies real-time involvement and ongoing participation within the application, distinguishing users who are actively logged in and utilizing the system at the moment of reference.

Throughout the present disclosure, the term "user experience" for a software application defines how the user interacts with the application, the ease of usage, the intuitiveness, amount of explanation needed to interact with the application and overall, the interaction patterns and behaviour expected by the user from the software application. A good user experience improves the ease of usage, positive interaction and overall user satisfaction while lowering the learning curve of the software application, user error rate and churn rate. A personalised user experience takes user experience one step further by tailoring the interfaces of the same application differently for different users based on the diversity of the user groups by identifying patterns, profiles and personas among the user base. The term "personas" for software application refers to different types of users that can be categorized based on behaviours, goals, needs, challenges, demographics, motivation, preferences, etc. While user experience is a generalized, one size fits all static approach to user experience, personalised user experience meets the specific needs of individual users based on behaviour and context and provides a dynamic and diverse experience across the user base while maintaining uniformity under the software application umbrella.

Throughout the present disclosure, the term "knowledge base" refers to a database that is a structured or non-structured collection of data or information stored in a computer-readable format. The knowledge base may comprise or more tables, each consisting of rows and columns, where data is organized, stored, and managed. The data within the knowledge base may include text, numbers, images, audio, video, or any other form of electronic data. The knowledge base may be designed to efficiently store, retrieve, and manipulate large volumes of data, enabling rapid access and retrieval of information for various applications. The knowledge base may provide a centralized repository for organizing and managing data, facilitating data integrity, consistency, and security. The data within the knowledge base may be accessed, modified, or queried through a database management system (DBMS), which provides a set of software tools and interfaces to interact with the database. The DBMS allows users or applications to perform operations such as inserting, updating, deleting, or searching for data within the knowledge base which may be of various types, including but not limited to relational databases, NoSQL databases, distributed databases, in-memory databases.

The knowledge base may be configured for storing labelled data in a predefined format. The predefined format may be a hierarchical structure for storing information related to objects, UI components, and personas and relationships therebetween. The knowledge base may serve as a collection of application data storing identified patterns and trends from the application data, thereby facilitating mapping of the patterns to the user personas and profiles and recommendation of user interface designs and personalised user experience based on those patterns. The knowledge base may also comprise data from external sources and prior research to form the basis of the suggestion patterns. The data may include but not be limited to various default user personas and profiles, their respective profiles and preferences and various suggestions based on external sources. The knowledge base 110 may be configured to be self-evolving based on new application data that is constantly collected and learned upon using machine learning algorithms.

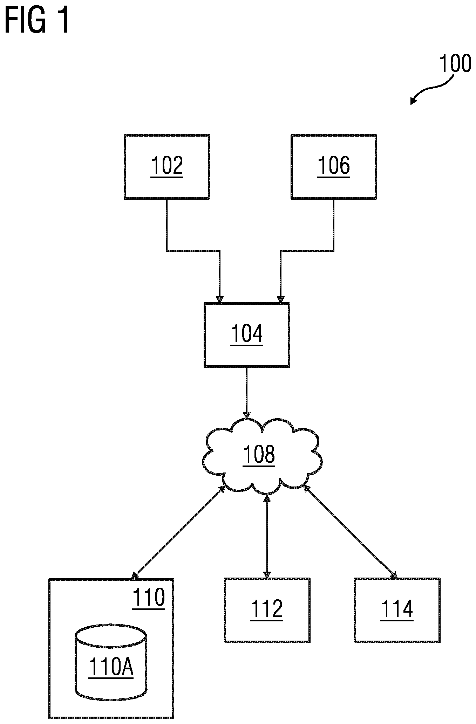

FIG 1 is a block diagram of a system 100 for providing personalised user experience associated with a software application 102, according to an embodiment of the present disclosure. The system 100 comprises one or more data acquisition devices 104 communicably connected to the software application 102. The one or more data acquisition devices 104 are configured for acquiring first data from the software application 102. The first data comprises first application data. In an embodiment, the first application data comprises data elements pertaining to objects, UI components, and respective coordinates along with any associated actions of the data elements.

The one or more data acquisition devices 104 are further communicably connected to one or more source applications 106 and are configured to acquire second data from the one or more source applications 106. In an embodiment, the one or more source applications 106 may include the software application 104. The one or more data acquisition devices 104 are further connected to a network 108, facilitating communication and data exchange with other components of the system 100.

As used herein, the term "network" refers to a connection framework that enables information exchange between multiple nodes, such as multiple terminals and servers. Examples of such networks include, but are not limited to, wired and wireless data communication networks, telephone networks, wired and wireless television communication networks, Local Area Networks (LANs), Wide Area Networks (WANs), and the Internet (e.g., World Wide Web). Examples of wireless data communication networks encompass technologies such as 3G, 4G, 5G, 3GPP (3rd Generation Partnership Project), 5GPP (5th Generation Partnership Project), LTE (Long Term Evolution), WiMAX (World Interoperability for Microwave Access), Wi-Fi, Wireless LAN (Local Area Network), WAN (Wide Area Network), PAN (Personal Area Network), the Internet, RF (Radio Frequency), Bluetooth, NFC (Near-Field Communication), satellite broadcasting networks, analogue broadcasting networks, and DMB (Digital Multimedia Broadcasting) networks, among others.

The system 100 further comprises one or more storage units 110 configured to store a knowledge base 110A. The one or more storage units 110 are communicably connected to the one or more data acquisition units 104 through the network 108. Across embodiments, the one or more storage units 110 may be, but not be limited to, hard disk drives (HDDs), solid-state drives (SSDs), flash drives, or other types of non-volatile memory. The one or more storage units 110 are communicably connected to the one or more data acquisition units 104 through the network 108, enabling storage and retrieval of data.

Across embodiments, the knowledge base 110A stored in the one or more storage units 108 may be implemented in various forms, such as a database, a data warehouse, or a data repository. The knowledge base 110A may be designed to store and manage large amounts of data, including user behaviour, preferences, and objectives, as well as data related to the software application 102 and the one or more source applications 106. The knowledge base 110A may also be configured to support various data formats, such as structured, semi-structured, or unstructured data. In an embodiment, the knowledge base 110A stores labelled data in a predefined format.

The knowledge base 110A serves as a repository for the second data acquired from the one or more source applications 106 via the one or more data acquisition devices 104. The second data comprises second application data, persona data, and user interaction data. The second application data is associated with the one or more source applications 106 and pertains to objects, user interface (UI) components, respective coordinates of the objects and the UI components, along with any actions associated with the objects and the UI components.

The term "objects" as used herein refers to distinct, self-contained entities or elements within the digital scene or interface that can represent a wide variety of things. The objects can be visual, interactive, or functional components and are typically manipulated or interacted with by the user or the system.

According to an embodiment, the objects (in the second application data as well as in the first application data) may be at least one of two-dimensional (2D) or three-dimensional (3D) objects. The objects may be configured to form part of spatial compositions that comprise at least one of two-dimensional (2D) compositions or three-dimensional (3D) compositions. As used herein, the term "spatial compositions" refers to the arrangement and organization of objects within a digital scene or interface, creating a cohesive and meaningful spatial relationship between the objects. Spatial compositions can be used to create a wide range of interactive and immersive environments, from simple 2D layouts to complex 3D scenes. By arranging objects in a deliberate and intentional manner, spatial compositions can guide user attention, facilitate interaction, and enhance the overall user experience.

In 2D software applications, the objects are 2D images, animations representing characters, assets, tools, pipes and valves, pumps and compressors, sensors and instruments, dashboards, conveyor systems, conveyor belts, motors and actuators, SCADA systems, etc. In 3D software applications, the objects are models or digital twins of assets such as cars, turbines, windmills, CNC machines, robotic arms, assembly lines, HVAC systems, control rooms, refinery units, forklifts, etc. In an example, the features pertaining to 2D objects such as contours, edges, texture, area, and shape are extracted using techniques like edge detection, segmentation, and moments. In another example, the first set of features pertaining to 3D objects such as surface area, volume, curvature, normal, and mesh topology are extracted by analysing the vertices, edges, and faces of 3D meshes or point clouds.

In an embodiment, the objects may be configured to form part of spatial compositions that comprise at least one of 2D compositions or 3D compositions. The 2D compositions may include arrangements of 2D objects, such as layouts of placards, sheets, or display screens, which may be used to provide visual information or context to users. For example, a 2D composition may comprise a digital representation of a factory floor layout, including the placement of safety placards, instructional sheets, and display screens. The 3D compositions may include arrangements of 3D objects, such as layouts of machinery or equipment, which may be used to simulate real-world industrial environments. For example, a 3D composition may comprise a digital representation of a machine shop, including the placement of digital twins of lathes, milling machines, drilling machines, and other industrial apparatus. The 3D composition may also include spatial relationships between objects, such as the proximity of machinery to each other or to other objects in the environment.

Considering an example of an industrial metaverse software application, the 2D objects may include physical objects such as placards, sheets, or display screens, which may be used to convey information or provide visual cues in an industrial setting, such as a factory floor. For example, in an industrial metaverse application simulating a machine shop, 2D objects may include digital representations of safety placards, instructional sheets, or display screens providing real-time data on machine performance. The 3D objects may include digital twins of physical equipment or machinery, such as lathes, milling machines, drilling machines, or other industrial apparatus. These digital twins may be designed to accurately replicate the appearance, functionality, and behaviour of their real-world counterparts, allowing users to interact with them in a simulated environment. The digital twins may also be configured to receive and respond to real-time data from their physical counterparts, enabling a high degree of synchronisation and accuracy.

The term "user interface (UI) components" as used herein refers to user interface components that are the interactive elements that users interact with in software applications, enabling control, input, and navigation. In both 2D and 3D environments, UI components provide users with tools for interacting with the applications, though the design and implementation can vary based on the dimensionality of the interface. For example, UI components comprise of elements including but not limited to, buttons, text fields, check boxes, radio buttons, dropdown menus, sliders, labels, tabs, panels, bars, icons, progress bars, modal windows, scrollbars, and the like. In another example, UI components comprise of elements such as 3D sliders, 3D buttons, 3D panels, 3D knobs, 3D dials, tooltips and annotations, virtual joysticks, and other holographic elements for interacting with users.

Throughout the present disclosure, the term "UI compositions" refers to the arrangement and combination of multiple UI components to create a cohesive and interactive user interface. UI compositions can be designed to facilitate user interaction, convey information, and enhance the overall user experience. In 2D environments, UI compositions typically involve the arrangement of UI components such as buttons, text fields, check boxes, and dropdown menus, among others, to create a flat and two-dimensional interface. Examples of 2D compositions include, but are not limited to, forms, dashboards, menus, and dialog boxes. In 3D environments, UI compositions involve the arrangement of 3D UI components, such as 3D sliders, 3D knobs, and 3D dials, to create an immersive and interactive interface. Examples of 3D compositions include, but are not limited to, virtual reality (VR) and augmented reality (AR) interfaces, interactive simulations, and other immersive environments. In some cases, UI compositions can combine elements of both 2D and 3D environments to create hybrid compositions. These compositions can be used to create interfaces that blend the benefits of 2D and 3D interactions, such as 2D menus and controls with 3D sliders and knobs. Examples of hybrid compositions include, but are not limited to, interactive dashboards with 3D sliders, virtual reality interfaces with 2D overlays, and other mixed-reality environments. These compositions can be used to create highly flexible and adaptable user interfaces that can be used in a wide range of applications and environments.

The persona data is associated with a plurality of user personas and respective objectives and tasks. The persona data may encompass various characteristics such as user preferences, behaviours, goals, needs, challenges, demographics, motivations, and other relevant attributes. These user personas are created to represent different types of users within the target audience of a software application. By defining persona data, developers and designers can better understand the diverse user base and tailor the application's features and interfaces to meet the specific needs and expectations of each persona.

The user interaction data pertains to interaction patterns of the plurality of personas, and relationships between the plurality of personas. The interaction patterns in the user interaction data may correspond to habitual user behaviours and preferences in navigating and interacting with elements displayed over a user interface. These interaction patterns may include, but are not limited to, clickstream data, navigation paths, search queries, and other user-generated events that occur during interactions with the software application. The user interaction data may also capture relationships between the plurality of personas, such as similarities and differences in their interaction patterns, preferences, and behaviours. For example, the user interaction data may reveal that certain personas tend to interact with specific features or elements of the software application more frequently than others, or that certain personas exhibit similar navigation patterns or search queries.

In an embodiment, the knowledge base 110A may also store the first data including the first application data. In an embodiment, the first data may be merged with the second data in the knowledge base 110A so as to obtain a union data set. The union data set may comprise of union application data pertaining to objects and UI components, respective coordinates of the objects and the UI components, along with any actions associated with the objects and the UI components. In a further embodiment, prior to merging the first data with the second data, the first application data and the second application data may be compared to identify data elements in the first application data that are absent or missing in the second application data. Then, those data elements in the first application data that are absent or missing in the second application data may be added to the knowledge base 110A. Advantageously, this approach enables the creation of a comprehensive and up-to-date knowledge base 110A, incorporating all relevant data elements from both the software application 102 and the one or more source applications 106.

In an embodiment, the data elements in the union data set in the knowledge base 110A may be labelled using a data labelling model. The data labelling model may be a machine learning model trained on previously labelled data comprising objects, UI components, personas, and relationships therebetween. The training data may include a large dataset of labelled examples, which enables the model to learn patterns and relationships between the data elements. The data labelling model may be trained using supervised learning to assign labels to the data elements in the union data set. The labels may include, but are not limited to, categorizations, classifications, or annotations that provide context and meaning to the data elements. Advantageously, labelling the data elements in the union data set using a data labelling model enables the system 100 to provide a more accurate and personalised user experience. Furthermore, the labelled data elements can be used to provide insights and analytics to system administrators, enabling them to optimize the system 100 and improve the overall user experience.

The system 100 comprises one or more processing units 112 communicably coupled to the one or more storage units 110 via the network 108. Across embodiments, the one or more processing units 112 may be implemented as local processing units, such as central processing units (CPUs) or graphics processing units (GPUs), or as remote processing units, such as cloud-based processing units or distributed computing systems. The one or more processing units 112 may also be implemented as a hybrid system, combining local and cloud-based processing to optimize performance and scalability. The one or more processing units 112 may be configured to perform various tasks, including data processing, data analysis, and facilitating machine learning, to support the provision of personalised user experiences associated with the software application 102.

The system 100 further comprises a memory 114 communicatively coupled to the one or more processing units 112 via the network 108. The memory 114 may include, but is not limited to, random access memory (RAM), read-only memory (ROM), or other types of volatile or non-volatile memory. The memory 114 is configured to store one or more modules in the form of machine-readable instructions that are executable by the one or more processing units 112. These one or more modules are designed to perform a method of providing personalised user experience associated with the software application 102. The modules may include, but are not limited to, data processing modules, user interface adaptation modules, and other modules necessary for providing a personalised user experience.

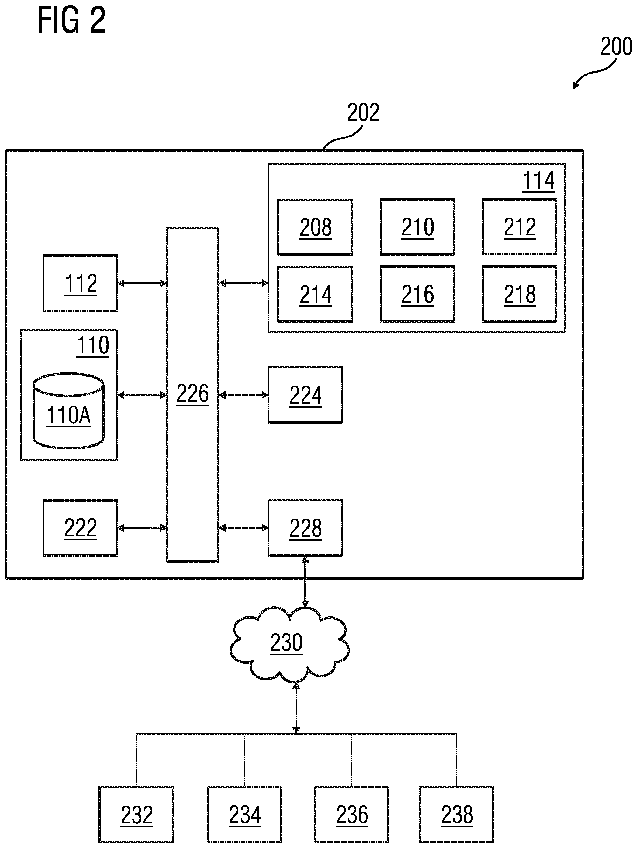

FIG 2 is a block diagram of an exemplary architecture 200 for providing personalised user experience associated with the software application, according to an exemplary embodiment of the present disclosure.

The architecture 200 includes a computer 202. As used herein, the term "computer" refers to a programmable electronic device capable of performing calculations, processing information, and executing instructions. This includes, but is not limited to, a general-purpose computer, a specialized computer, or any other device that can perform the functions described herein. The computer 202 may be an on-site computer located in the environment or an off-site computer operable by a remote user. The computer 202 may be a persona computer, a laptop computer, a tablet, a server, a virtual machine, and the like.

The computer 202 includes the one or more storage units 110, the one or more processing units 112, the accessible memory 114, an input unit 222, a display unit 224, a network interface 228, and a bus 226.

The one or more storage units 110 may be non-transitory storage medium configured for storing the knowledge base 110A. The non-transitory storage medium may be a tangible storage medium, such as a magnetic disk, an optical disk, or a semiconductor memory device. The non-transitory storage medium may also be a distributed storage system, such as a cloud storage system, that stores data across multiple physical locations. The one or more storage units 110 may be equipped with storage devices, which may include, but not limited to, traditional hard disk drives (HDDs) and/or solid-state drives (SSDs).

The one or more processing units 112 may include any type of computational circuit, such as but not limited to, a microprocessor, a microcontroller, a complex instruction set microprocessor, a reduced instruction set microprocessor, a very long instruction word microprocessor, an explicitly parallel instruction computing microprocessor, a graphics processor, a digital signal processor (DSP), or any other type of processing circuit. In an embodiment, the one or more processing units 112 may be embodied in one or more web servers. The one or more processing units 112 execute a method of providing personalised user experience associated with the software application 102, which will be explained in detail later.

The memory 114 may be a non-transitory volatile memory or a non-volatile memory. The memory 114 may be coupled for communication with the one or more processing units 112, such as being a computer-readable storage medium. The one or more processing units 112 may execute machine-readable instructions and/or source code stored in the memory 114. A variety of machine-readable instructions may be stored in and accessed from the memory 114. The memory 114 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. The memory 114 includes a module package 206. The module package 206 is stored in the form of machine-readable instructions on any of the above-mentioned storage media and is in communication with and executed by the one or more processing units 112.

The module package 206 comprises a data acquisition module 208, a task determination module 210, an element selection module 212, a spatial configurator module 214, a metadata generation module 216, and a user experience adaptation module 218.

The data acquisition module 208 is configured or receiving the first data associated with the software application 102A, and the second data from the knowledge base 110A which includes the second application data associated with the one or more source applications 106, the persona data associated with the plurality of user personas and respective personas and tasks, and user interaction data pertaining to interaction patterns of the plurality of user personas and relationships between the user personas. In one embodiment, the data acquisition module 208 is also configured to receive the first application data which comprises data elements pertaining to the objects and the UI components of the software application 102, respective coordinates of the objects and the UI components of the software application 102, along with any associated actions of the objects and the UI components of the software application 102.

The data acquisition module 208 is configured for acquiring user data, such as data related to the user, their persona, preferences, settings, and personal information. This may include, but is not limited to, their role, interaction patterns with components and features within the one or more source applications 106 (which may also include the software application 102 according to an embodiment), preference data like handedness, colour preferences, notification preferences, brightness and contrast preferences, and individual customized settings.

The data acquisition module 208 may also be configured for acquiring operational data, such as data generated during the lifecycle of the application when users perform core functions needed to achieve the intended result and complete their assigned tasks. Additionally, the data acquisition module 208 may be configured for acquiring analytics data, such as data collected to monitor and understand the performance of the application and interaction of the user with the software application 102. This data comprises various usage interactions, including but not limited to, features being used, their frequency of usage, interaction with environment components, time taken between different interactions, and user interaction with elements on the user interface within the context of task workflow and in the broader context of the software application 102.

The data acquisition module 208 is configured for acquiring and processing data from various sources, including the first data and the second data. In an embodiment, the data acquisition module 208 may merge the first data with the second data in the knowledge base 110A to obtain a union data set.

For example, in context of a metaverse software application, the data acquisition module 208 may be configured to extract first application data from the metaverse software application, including 3D objects, 3D compositions, UI elements and UI compositions and then enrich the knowledge base 110A with missing application data components therein (i.e., elements in the first application data that are distinct from the elements in the second application data stored in the knowledge base 110A). For instance, elements such as security camera, security room, security dashboard, reliability dashboard may be initially present in the knowledge base 110A. The first application data associated with the metaverse software application may comprise new elements that are missing in the knowledge base 110A, such as a throttle to sound an alarm, a download button for downloading reliability reports and the like. These missing elements can be merged into the knowledge base 110A to obtain the union data set, thereby enriching the knowledge base 110A. In an embodiment, such elements may also be later utilized for rendering personalised user experiences to active users independently of their corresponding objectives and tasks.

In addition, the first data may comprise first persona data associated with the software application 102, comprising a set of existing personas and their corresponding features (i.e., motivations, objectives, and tasks). The first persona data associated with the software application 102 too can be merged with the persona data which forms part of the second data associated with the one or more source applications.

The one or more processing units 112 may then leverage a data labelling model 232 to label the data elements in the union data set. The data labelling model 232 is a machine learning model trained on previously labelled data comprising objects, UI components, personas, and relationships therebetween. The training data may include a large dataset of labelled examples, which enables the data labelling model 232 to learn patterns and relationships between the data elements. The data labelling model 232 may be trained on data schemas defining various objects part of the one or more source applications 106. The labels may include, but are not limited to, categorizations, classifications, or annotations that provide context and meaning to the data elements. In an embodiment, the labels may include, but not limited to, UI components like buttons, text boxes, and icons; objects or 3D components like boxes, machines, robots, Automated Guided Vehicles (AGVs); actions associated with the UI components and the objects like click, pick up, mouse interactions, hover etc., and responses of individual components based on these actions. The data labelling model 232 may be trained using supervised learning to assign labels to the data elements in the union data set.

The labelled data is stored in a predefined format in the knowledge base 110A, wherein the predefined format is a hierarchical structure for storing information related to the objects, the UI components, the personas and relationships therebetween. The data may be stored in a semi-structured, defined schema. The base unit of storage is an entity, Various information related to the entity may be stored in a relationship form. For example, a button is an entity, and its properties are stored along with it. Then, the button "has a" click function. These relationships are defined in the form of an ontology and overall used to create context and traverse the knowledge base 110A. The objects, the UI components, and their relative positions as well as features are all stored in a contextual manner and can be queried. In an example, the labelled data can be stored in the form of modelling languages like XML or JSON.

The data acquisition module 208 is configured for obtaining active user information, which includes at least one of a persona, one or more objectives, or one or more tasks associated with one or more active users interacting with the software application 102. This active user information may be obtained and collected through various means, including user input, user behaviour analysis, system data, and external data sources. For example, the active user may provide their persona, objectives, and/or tasks through user input, such as filling out a user profile or completing a survey. Furthermore, the data acquisition module 208 may collect data from external sources, such as customer relationship management (CRM) systems or enterprise resource planning (ERP) systems, to obtain active user information.

The active user information may include a persona, which may comprise information about the active user's role, job function, or department.

Alternatively, the active user information may include one or more objectives, which comprise information about the active user's goals, targets, or key performance indicators (KPIs). The active user information may also include one or more tasks, which comprise information about the active user's work assignments, projects, or activities. In some embodiments, the active user information may include a combination of two or more of these elements, such as the persona and the one or more objectives, the persona and the one or more tasks, the one or more objectives and the one or more tasks, or a combination of all three, namely, the persona, the one or more objectives, and the one or more tasks.

As aforementioned, the data acquisition module 208 is configured to acquire and process data from various sources, including the active user information. In an embodiment, obtaining active user information may comprise receiving a selection from each active user, wherein the said selection corresponds to a selection of at least one of the persona, the one or more objectives, or the one or more tasks from one or more predefined lists. The one or more predefined lists may be structured as tables, lists, or other data structures, and may include a set of predefined personas, objectives, and/or tasks that are relevant to the software application 102.

For example, in an oil filter manufacturing factory, the one or more predefined lists may include a table of personas, with each row representing a different persona and each column representing a different attribute of the persona, such as role, department, or job function. The table may be structured as follows:

**Table 1**

| **Role ID** | **Role / Broad Persona** | **Department** | **Job Function** |
|---|---|---|---|
| 1 | Inspection Engineer | Quality Control | Inspect oil filters for leaks |
| 2 | Maintenance Engineer | Maintenance | Maintain physical systems that manufacture oil filters |
| 3 | Dispatch Personnel | Logistics | Coordinate and track shipment of oil filters |
| 4 | Site Safety Engineer | Safety | Ensure site safety and security in the oil filter manufacturing facility |

Similarly, the one or more predefined lists may also include a table of objectives, with each row representing a different objective and each column representing a different attribute of the objective, such as objective ID, objective name, and objective description. The table may be structured as follows:

**Table 2**

| **Objective ID** | **Objective Name** | **Objective Description** |
|---|---|---|
| 1 | Prevent Oil Leaks | Ensure that all oil filters are inspected for leaks before dispatch |
| 2 | Maintain Physical Systems | Maintain physical systems that manufacture oil filters to prevent downtime |
| 3 | Coordinate and Track Shipment | Ensure timely and accurate delivery of oil filters to customers by coordinating and tracking shipments |
| 4 | Ensure Site Safety and Security | Protect the site, personnel and assets from potential hazards and threats to ensure a safe working environment |

In an embodiment, obtaining active user information may comprise determining, using an attribution model 234, at least one of the persona, the one or more objectives, or the one or more tasks of the persona of each active user based on corresponding user-interaction data associated with the software application 102. The attribution model 234 is a machine learning model trained on previously labelled data pertaining to associations of user personas of the plurality of users with corresponding user interaction patterns.

The attribution model 234 is trained on previously labelled data pertaining to associations of user personas of the plurality of users with corresponding user interaction patterns. The training data may include a large dataset of user interaction data, where each interaction is labelled with the corresponding persona, objective, and task. The training data for the attribution model 234 may include a large dataset of interaction data, where each user interaction is labelled with the corresponding persona, objective, and task.

The training data for the attribution model 234 may be collected from a variety of sources, such as but not limited to, user logs or activity streams, system logs or event logs, user feedback or surveys, or observations of user behaviour. The training data may be collected from the one or more source applications 106 to train the attribution model 234. The training methodology employed for the attribution model 234 may be supervised learning methodology, for example involving combination of logistic regression and decision tree algorithms to learn the patterns and relationships between user interactions and corresponding personas, objectives, and tasks.

Portion of an exemplary dataset of interaction data for training the attribution model 234, in context of the oil filter manufacturing factory, is shown in the table below:

**Table 3**

| **Action ID** | **Interaction** | **Broad Persona** | **Persona Limitations** | **Objective** | **Task** |
|---|---|---|---|---|---|
| 1 | Clicked on "view report" icon at bottom right corner of the screen to view the inspection report | Inspection Engineer | Right-handed, mostly stressed | Prevent Oil Leaks | View inspection report |
| 2 | Edited text in the maintenance schedule | Maintenance Engineer | Left-handed, dyslexic | Maintain Physical Systems | Edit maintenance schedule |
| 3 | Clicked on the icon "download dispatch report" located below information dashboard | Dispatch Personnel | Right-handed, colour blind | Coordinate and Track Shipment | Download dispatch report |
| 4 | Hovered mouse pointer towards left side of the dashboard interface; then navigated to the right side of the dashboard interface; and activated the "sound emergency alarm" function by interacting with a throttle object located adjacent to the dashboard interface on the right side. | Site Safety Engineer | Left-handed, prefers visual cues | Ensure Site Safety and Security | Sound an alarm in case of emergency |

The task determination module 210 is configured for determining one or more tasks to be performed by each active user to achieve the one or more objectives of the respective persona of each active user, by mapping the active user information with the persona data in the knowledge base 110A.

In an embodiment, to accomplish this task mapping process effectively, the one or more processing units 112 leverage asemantic contextualisation model 236. The one or more processing units 112 utilize the semantic contextualisation model 236 to correlate the active user information with the persona data in the knowledge base 110A. The semantic contextualisation model 236 is a trained machine learning model that uses vector embeddings to represent entities in a multi-dimensional space. The semantic contextualisation model 236, disclosed herein, may employ a supervised learning methodology for training, wherein labelled data groupings are utilized to guide the model's learning process. The training data for the semantic contextualisation model 236 may comprise a substantial dataset consisting of persona-objective-task groupings, with each grouping representing a distinct combination of a persona, associated objective(s), and associated task(s).

The semantic contextualisation model 236 may utilize vector embeddings to represent entities within a multi-dimensional space, enabling the model to learn intricate relationships and correlations among the entities. Vector embeddings are representations of objects or entities in a multi-dimensional space where each entity is assigned a vector, typically a multi-dimensional array of numerical values. These numerical values capture the characteristics or features of the entity in a continuous and dense space. In the context of the semantic contextualisation model 236, vector embeddings play a crucial role in encoding semantic information about entities. By mapping entities to vectors in a multi-dimensional space, vector embeddings enable the model to learn complex relationships and similarities between entities based on their numerical representations. The key advantage of using vector embeddings is that they facilitate the model to capture subtle semantic similarities and contextual nuances between different entities. This means that entities with similar meanings or attributes are represented by vectors that are closer together in the multi-dimensional space, while entities with different meanings are represented by vectors that are farther apart.

The training data for the semantic contextualisation model 236 comprises an extensive corpus of text data, where each text sample represents a persona-objective-task grouping. This text data undergoes preprocessing to eliminate stop words, punctuation, and other irrelevant information before being utilized to train the semantic contextualisation model 236 through a supervised learning methodology.

In the supervised learning approach, the semantic contextualisation model 236 is trained to predict the context in which a given entity appears. For instance, when provided with a persona, the semantic contextualisation model 236 is trained to predict the associated objective(s) and task(s). Similarly, when given an objective, the semantic contextualisation model 236 learns to predict the related persona(s) and task(s). The semantic contextualisation model 236 employs a multi-dimensional space to represent entities, grouping semantically similar entities closely together. A distance metric such as cosine similarity or Euclidean distance may be used to quantify the similarity between entities. The semantic contextualisation model 236 may be trained to minimize the distance between semantically similar entities and maximize the distance between dissimilar entities.

After training, the semantic contextualisation model 236 is capable of determining the one or more tasks to be performed by an active user to achieve the respective one or more objectives. By inputting the active user information and utilizing vector embeddings to represent entities in the multi-dimensional space, the semantic contextualisation model 236 calculates the similarity between the active user information and the persona-objective-task groupings in the knowledge base 110A. To validate the performance and efficacy of the trained semantic contextualisation model 236, human feedback mechanisms may be employed. Human evaluators or experts may interact with the model's outputs and provide feedback on the accuracy, relevance, and contextual appropriateness of the model's associations between personas, objectives, and tasks. This human feedback loop can help refine the model's predictions, enhance its contextual understanding, and improve its overall performance.

In one embodiment, the task determination module 210 is configured for determining one or more tasks for each active user based on their persona as input received from the active user information. For each active user, the semantic contextualisation model 236 compares the active user's persona with the persona-objective-task groupings in the knowledge base 110A, utilizing vector embeddings to represent the persona (i.e. input from the active user information) and determine the most similar persona from the persona-objective-task grouping in the knowledge base 110A. Consequently, data pertaining the corresponding one or more tasks from the persona-objective-task grouping is obtained as output.

In another embodiment, the task determination module 210 is configured for determining one or more tasks for each active user based on corresponding task(s) as input received from the active user information. For each active user, the semantic contextualisation model 236 compares the input with the persona-objective-task groupings in the knowledge base 110A, utilizing vector embeddings to represent the corresponding task(s) (i.e., input from active user information) and determine the most similar task(s) from the persona-objective-task grouping in the knowledge base 110A. Consequently, data pertaining the corresponding one or more tasks from the persona-objective-task grouping is obtained as output.

In yet another embodiment, the task determination module 210 is configured for determining one or more tasks for each active user based on corresponding objective(s) as input received from the active user information. For each active user, the semantic contextualisation model 236 compares the input with the persona-objective-task groupings in the knowledge base 110A, utilizing vector embeddings to represent the corresponding objective(s) (i.e., input from active user information) and determine the most similar task(s) from the persona-objective-task grouping in the knowledge base 110A. Consequently, data pertaining the corresponding one or more tasks from the persona-objective-task grouping is obtained as output.

In yet another embodiment, the task determination module 210 is configured for determining one or more tasks for each active user based on the corresponding persona and corresponding objective(s) as input received from the active user information. For each active user, the semantic contextualisation model 236 compares the input with the persona-objective-task groupings in the knowledge base 110A, utilizing vector embeddings to represent these input elements and determining the most similar persona-objective pair(s) from the persona-objective-task grouping in the knowledge base 110A. Consequently, data pertaining the corresponding one or more tasks from the persona-objective-task grouping is obtained as output.

In yet another embodiment, the task determination module 210 is configured for determining one or more tasks for each active user based on their corresponding persona and corresponding task(s) as input from the active user information. For each active user, the semantic contextualisation model 236 compares the input with the persona-objective-task groupings in the knowledge base 110A, utilizing vector embeddings to represent these input elements and determining the most similar persona-task pair(s) from the persona-objective-task grouping in the knowledge base 110A. Consequently, data pertaining the corresponding one or more tasks from the persona-objective-task grouping is obtained as output.

In yet another embodiment, the task determination module 210 is configured for determining one or more tasks for each active user based on their corresponding objective(s) and corresponding task(s) as input received from the active user information. For each active user, the semantic contextualisation model 236 compares the input with the persona-objective-task groupings in the knowledge base 110A, utilizing vector embeddings to represent these input elements and determining the most similar objective-task pair(s) from the persona-objective-task grouping in the knowledge base 110A. Consequently, data pertaining the corresponding one or more tasks from the persona-objective-task grouping is obtained as output.

In yet another embodiment, the task determination module 210 is configured for determining one or more tasks for each active user based on their corresponding persona, corresponding objective(s), and corresponding task(s) as input received from the active user information. For each active user, the semantic contextualisation model 236 compares the input with the persona-objective-task groupings in the knowledge base 110A, utilizing vector embeddings to represent these input elements and determining the most similar persona-objective-task grouping. Consequently, data pertaining the corresponding one or more tasks from the persona-objective-task grouping is obtained as output.

As example, consider the example of oil filter manufacturing factory. An exemplary mapping of persona, objectives and determined one or more tasks by executing instruction in the task determination module is shown in the below table:

**Table 4**

| **Persona** | **Objective** | **Task 1** | **Task 2** |
|---|---|---|---|
| Site safety engineer - left-handed | Sound an alarm in case of emergency | Move left hand to the throttle located on the left side of the dashboard | Pull the throttle down using the left controller's X button |
| Site safety engineer - right-handed | Sound an alarm in case of emergency | Move right hand to the throttle located on the right side of the dashboard | Pull the throttle down using the right controller's A button |

The element selection module 212 is responsible for determining, for each active user, one or more elements from the knowledge base 110A for realisation of the corresponding determined one or more tasks. Here, the "one or more elements" correspond to at least one of the objects or the UI components in the knowledge base 110A. The determination of the one or more elements may be done by analysing the one or more tasks determined by the task determination module 210 and identifying the one or more elements (objects and/or the UI components) that are required to complete those tasks.

The element selection module 212 may analyse the determined one or more tasks and identify the relevant one or more elements (objects and/or the UI components) by extracting keywords from the task description and using them to search for relevant objects or UI components that are labelled using the data labelling model 232 and stored in the knowledge base 110A, and/or by using entity recognition algorithms to identify entities mentioned in the task description and matching them to the objects and/or the UI components in the knowledge base 110A.

The element selection module 212 may also use semantic search algorithms to search for objects or UI components in the knowledge base 110A that are semantically related to the task description. Additionally, the element selection module 212 may use various techniques, such as natural language processing (NLP) and machine learning algorithms, to analyse the tasks and identify the relevant objects or UI components. The element selection module 212 may also filter the results based on the active user's preferences, permissions, and other factors, and rank the results based on their relevance to the determined one or more tasks and the active user's behaviour.

The output of the element selection module 212 is a list of one or more elements that are necessary for the realization of the corresponding determined one or more tasks, which may include objects, UI components, or a combination of both, along with metadata about each element, such as its type and description.

In an embodiment, the element selection module 212 may also determine the relationships between the elements and the tasks, such as determining that a particular object is required for a task, but only if the active user has a certain permission or role, or determining that a particular UI component is required for a task, but only if the active user has a certain level of expertise or experience.

As an example, the element selection module 212 may determine the elements required for each task based on the persona and the task description. The following table illustrates the elements required for Task 1 and Task 2 for each persona, in an oil filter manufacturing facility example:

**Table 5**

| **Persona** | **Objective** | **Task 1** | **Task 2** | **Elements Required** |
|---|---|---|---|---|
| Site safety engineer - left-handed | Sound an alarm in case of emergency | Move left hand to the throttle located on the left side of the dashboard | Pull the throttle down using the left controller's X button | Throttle, Left Controller, X Button |
| Site safety engineer - right-handed | Sound an alarm in case of emergency | Move right hand to the throttle located on the right side of the dashboard | Pull the throttle down using the right controller's A button | Throttle, Right Controller, A Button |

In this example, the element selection module 212 has determined that the elements required for tasks of the "site safety engineer - left-handed" persona are the throttle, the left controller, and the X button. The throttle is the object that the user needs to interact with to complete the task, and the left controller is the UI composition at the left side of the dashboard that the user needs to access to click on the X button (UI element) to achieve the corresponding objective of sounding the alarm.

Similarly, for the "site safety engineer - right-handed" persona, the element selection module 212 has determined that the elements required for tasks are the throttle, the right controller, and the A button. The throttle is the object that the user needs to interact with to complete the task, and the right controller is the UI composition at the right side of the dashboard that the user needs to access to click on the A button (UI element) to achieve the corresponding objective of sounding the alarm.

The spatial configurator module 214 is responsible for determining the coordinates of the one or more elements determined and selected by the element selection module 212 based on a mapping of the corresponding active user with the user interaction data. The spatial configurator module 214 takes into account each active user's behaviour, preferences, and interaction patterns to determine the optimal placement of the elements on the corresponding user interface. For example, referring to action ID 4 from Table 4, a left-handed site safety engineer who prefers visual cues (persona of the active user), whose task is to sound an alarm in case of an emergency (determined task of the active user), exhibits a user interaction pattern that involves initially hovering the mouse pointer towards the left side of the dashboard interface, followed by navigation to the right side, where the "sound emergency alarm" function is activated through interaction with the throttle object situated adjacent to the dashboard interface.

In this case, the spatial configurator module 214 would analyse the user interaction data and determine that the user, a site safety engineer, is left-handed and prefers visual cues. The module would also take into account the active user's objective, which is to ensure site safety and security, and the task, which is to sound an alarm in case of emergency. Based on this analysis, the spatial configurator module 214 would determine the coordinates of the elements, such as the throttle object, to be placed on the right side of the dashboard interface, adjacent to the dashboard interface. This placement would be optimal for the user, as it would allow them to easily access the throttle object with their left hand, while also providing a clear visual cue for the alarm function.

For example, in another scenario, another left-handed site safety engineer may have a preference for simple UI elements, which is taken into account by the element selection module 212. In this case, the element selection module 212 may select a simple button UI element to sound the alarm, rather than the throttle object. In this scenario, the spatial configurator module 214 would analyse the user interaction data and determine that the active user, a left-handed site safety engineer, prefers simple UI elements and has a task to sound an alarm in case of emergency. The spatial configurator module 214 would then determine the coordinates of the simple button UI element, taking into account the user's left-handedness and preference for simple UI elements. The spatial configurator module 214 may determine that the optimal placement for the simple button UI element is on the left side of the dashboard interface and adjacent to the dashboard interface, allowing the active user to easily access the button with their left hand, while also providing a clear and simple visual cue for the alarm function.

The output of the spatial configurator module 214 is a set of coordinates for each active user that define the placement of the determined one or more elements for the corresponding one or more tasks, on each active user's user interface. These coordinates specify the exact location and arrangement of the elements on the user interface, taking into account the user's behaviour, preferences, and interaction patterns. The set of coordinates may include, for example, Cartesian coordinates of the elements on the user interface, as well as other spatial parameters such as width, height, and orientation.

The element selection module 212 and the spatial configurator module 214 in conjunction are configured to: determine, for each active user, the one or more elements from the knowledge base 110A for realization of the corresponding determined one or more tasks and the coordinates of said one or more elements for user accessibility. In an embodiment, these outcomes may be achieved through the use of one or more contextual intelligence models 238, which are machine learning models that may be trained on a variety of data sources.

The one or more processing units 112 utilize the one or more contextual intelligence models 238 to analyse the data sources and generate predictions about the optimal elements and their coordinates for each active user. The one or more contextual intelligence models 238 may be trained on node learning data for identifying the objects, the UI components, and respective coordinates in the knowledge base 110A, as well as actions learning data for analysing actions and behaviours associated with the objects and the UI components in the knowledge base 110A.

Additionally, the one or more contextual intelligence models 238 may be trained on interaction data for identifying user behaviour with the software application, including one or more of user input methods, user interaction patterns, or user feedback to learn user interactions with the objects and the UI components in the knowledge base 110A. The models may also be trained on design comprehension data for identifying UI elements that form part of the UI components in the knowledge base 110A and design structures associated therewith for creating UI compositions.

Furthermore, the one or more contextual intelligence models 238 may be trained on first contextual understanding data for identifying contextual information associated with the UI components in the knowledge base 110A, including design choices of the UI components, interactions provided by the UI components, relative positions of the UI components, and correlations between the UI components. The models may also be trained on second contextual understanding data for analysing event logs, object interactivity records, temporal and spatial relationships between the objects and the UI components in the knowledge base 110A.

The one or more contextual intelligence models 238 may be trained using one or more of node learning data, actions learning data, interaction data, design comprehension data, first contextual understanding data, or second contextual understanding data. The one or more contextual intelligence models 238 may be trained using a supervised learning methodology, wherein the models are trained on labelled data to learn the relationships between the input data and the predicted outputs. The training process may involve optimizing the model parameters to minimize the error between the predicted outputs and the actual outputs, thereby improving the accuracy of the contextual intelligence models 238.

The metadata generation module 216 is configured for generating metadata for each active user, the metadata pertaining to said determined one or more elements and coordinates of the one or more elements.

The metadata pertaining to the nature and/or features of the corresponding one or more elements is typically obtained from the application data, which is stored in the knowledge base 110A. The application data includes information about the various elements, such as the UI components and the objects that are used to generate the user interface. The metadata generation module 216 extracts the relevant metadata from the application data, including information such as the element's name, type, properties, and other characteristics that describe the nature and/or features of the element. The metadata pertaining to the coordinates of the one or more elements, on the other hand, is generated based on the output from the spatial configurator module 214. The metadata generation module 216 receives the metadata pertaining to the coordinates of the one or more elements (such as Cartesian or Polar coordinates) from the spatial configurator module 214 and combines it with the metadata pertaining to the nature and/or features of the corresponding one or more elements to generate a comprehensive metadata. The metadata generation module 216 generates the comprehensive metadata in a format that is compatible with the user experience adaptation module 218 and the system 100.

In an embodiment, the metadata generated by the metadata generation module 216 may also include persona-related information, such as a persona ID, persona type, and persona characteristics. The metadata may also include objective-related information, such as an objective ID, objective type, and objective characteristics. This information can be used to tailor the user experience to the specific persona and objectives of each active user, by highlighting relevant UI components and objects and hiding or de-emphasizing irrelevant ones.

Table 6 shown below illustrates the task and element metadata for a left-handed site safety engineer. The table includes the tasks required to sound an alarm in case of an emergency, the common metadata that applies to both tasks, the elements required to complete the tasks, and the metadata pertaining to each of the determined elements.

**Table 6**

| **Task 1** | **Task 2** | **Common metadata** | **Elements Required** | **Metadata pertaining to the determined elements** |
|---|---|---|---|---|
| Move left hand to the throttle located on the left side of the dashboar d | Pull the throttle down using the left controller' s X button | { | Throttle | { |
| | | "persona": | | "entity": "<<object>>", |
| | | "Site Safety | | "entity_ID": |
| | | Engineer (Left-Handed)", | | "<<throttle>>", |
| | | "objective": "To sound alarm in case of emergency", | | "bounding_box_coordinates |
| | | | | ": { |
| | | | | "x_min": -80, "y_min": - 15, |
| | | "condition": "If emergency situation arises", | | "z_min": -10, "x_max": - 60, |
| | | | | "y_max": 15, "z_max": 0 |
| | | | | } |
| | | "action": "Sound alarm", "tasks": { | | } |
| | | | Left Controlle r | { |
| | | "Task 1": "Move left hand to the throttle located on the left side of the dashboard", | | "entity": |
| | | | | "<<UI_composition>>", |
| | | | | "entity_ID": |
| | | | | "<<left_controller>>", |
| | | | | "bounding_box_coordinates |
| | | "Task 2": "Pull the throttle down using the left controller's X button" | | ": { |
| | | | | "x_min": -40, "y_min": - 40, |
| | | | | "z_min": -10, "x_max": - 20, |
| | | | | "y_max": 40, "z_max": 0 |
| | | } | | } |
| | | } | | } |
| | | | X Button | { |
| | | | | "entity": |
| | | | | "<<UI_element>>", |
| | | | | "entity_ID": |
| | | | | "<<x_button>>", |
| | | | | "bounding_box_coordinates |
| | | | | ": { |
| | | | | "x_min": -35, "y_min": 10, |
| | | | | "z_min": 0, "x_max": - 25, |
| | | | | "y_max": 20, "z_max": 0 |
| | | | | } |
| | | | | } |

In table 6, the common metadata includes information about the persona, objective, condition, action, and tasks, which provides context for the tasks and elements. The elements required to complete the tasks include the throttle, left controller, and X button, each with its own metadata that describes its characteristics and bounding box coordinates. In the realm of 3D graphics and user interface design, a bounding box serves as a cuboidal enclosure that encloses a 3D object or a UI element. The bounding box coordinates consist of six values: x_min, y_min, z_min, x_max, y_max, z_max. These values define the position and size of the bounding box in 3D space. Such coordinates are commonly employed in computer graphics, game development, and UI design for tasks like collision detection, ray casting, and UI layout.

The metadata pertaining to each element includes information about the entity type, entity ID, and bounding box coordinates, which provides a detailed description of each element and its location in 3D space. This metadata can be used to generate a user interface that is tailored to the specific needs of the left-handed site safety engineer and the tasks required to sound an alarm in case of an emergency.

The user experience adaptation module 218 is configured for rendering a personalised user experience for each active user by extracting the corresponding determined one or more elements from the knowledge base 110A and positioning said one or more elements according to the corresponding metadata.

In an embodiment, the user experience adaptation module 218 facilitates generation of a customised layout and arrangement of the objects and the UI components from the knowledge base 110A corresponding to the respective metadata, based on user interaction patterns and preferences of the persona of the corresponding active user during an active user session with the software application 102.

The user experience adaptation module 218 works by first receiving the metadata generated by the metadata generation module 216, which includes information about the elements required for each task, their coordinates, and other relevant attributes. The module then uses this metadata to extract the corresponding elements from the knowledge base 110A, which includes a repository of objects and UI components.

The user experience adaptation process, as implemented by the user experience adaptation module 218, comprises a series of steps that are executed by the one or more processing units 112. These steps include receiving the metadata generated by the metadata generation module 216, which includes information about the elements required for each task, their coordinates, and any other relevant attributes. This metadata is then used to extract the corresponding one or more elements from the knowledge base 110A, which includes a repository of objects and UI components.

In an embodiment, the user experience adaptation module 218 may utilise an adaptive graphics engine (not illustrated) and an adaptive UI engine (not illustrated) to facilitate the generation of a customised layout and arrangement of the objects and the UI components extracted from the knowledge base 110A that are necessary for the realization of the determined one or more tasks of each active user.

The adaptive graphics engine is a software component that enables the rendering of 2D and 3D graphics in a dynamic and adaptive manner. This engine may be utilised to generate a customised layout and arrangement of the objects and the UI components, taking into account the user interaction patterns and preferences of the persona of the corresponding active user. The adaptive graphics engine may be configured to render the objects and the UI components in a manner that is optimised for the specific user, based on their interaction patterns and preferences.

The adaptive UI engine is a software component that enables the generation of a customised user interface (UI) that is tailored to the specific needs and preferences of the user. This engine may be utilised to generate a UI that is optimised for the specific user, based on their interaction patterns and preferences. The adaptive UI engine may be configured to generate a UI that is intuitive and easy to use, and that provides the user with a seamless and efficient interaction experience.

In an embodiment, the adaptive graphics engine and the adaptive UI engine may be utilised in conjunction with each other to generate a customised layout and arrangement of the objects and the UI components. The adaptive graphics engine may be used to render the objects in a dynamic and adaptive manner, while the adaptive UI engine may be used to generate a UI that is tailored to the specific needs and preferences of the user.

The adaptive graphics engine and the adaptive UI engine may be implemented using a variety of technologies, including but not limited to, graphics processing units (GPUs), central processing units (CPUs), and software frameworks such as OpenGL, DirectX, and Unity.

In an embodiment, the adaptive graphics engine and the adaptive UI engine may be configured to operate in real-time, allowing for the dynamic and adaptive rendering of the objects and the UI components. This may enable the user experience adaptation module 218 to provide a highly responsive and interactive user experience, that is tailored to the specific needs and preferences of each active user.

In an embodiment, role of software application users may evolve over time, consequently leading to the evolution of active user personas. The adaptive engines, i.e., adaptive graphics engine and the adaptive UI engine, are instrumental in providing a personalised user experience tailored to the evolving active user personas corresponding to active user sessions. Within this context, an active user session is defined as a period during which the user is actively engaged with the software application, interacting with various elements and functionalities. This active session is crucial as it captures the user's immediate interactions, preferences, and behaviours, which are then used to dynamically adjust the user experience in real-time. By adapting to these evolving personas and behaviours, the adaptive engines enhance user satisfaction and engagement with the software application, resulting in a more tailored and user-centric experience.

In an embodiment, the user experience adaptation module 218 facilitates comprehensive personalization of user interactions with the software application 102, wherein said personalization encompasses multiple hierarchical layers of adaptation orchestrated in real-time during active user sessions.

In an embodiment, the user experience adaptation module 218 may be configured to implement interface layer modifications, comprising customization of layout arrangements, visual hierarchy adjustments, and modification of interaction paradigms including but not limited to gestural inputs, click sequences, and keyboard shortcuts. The said modifications may be derived from the knowledge base 110A in accordance with user persona specifications. For interface layer modifications, the adaptive UI engine processes layout and interaction modifications through component tree analysis and coordinate position computation, while the adaptive graphics engine implements sophisticated three-dimensional transformations of object meshes, texture mappings, and material properties.

In an embodiment, the user experience adaptation module 218 effectuates behavioral adaptation mechanisms, wherein workflow sequences are dynamically altered based on user expertise levels stored in the knowledge base 110A. Said behavioral adaptations include, but are not limited to, calibrated system response times, personalised feedback mechanisms, contextually relevant help systems, and adaptive error handling protocols optimized for specific user personas. In effectuating behavioural adaptations, the adaptive UI engine manages workflow modifications through state machine implementations, and the adaptive graphics engine executes complex particle systems for visual feedback, implements real-time ray tracing for enhanced object interactions, and manages dynamic shadow mapping for depth perception enhancement.

In an embodiment, the user experience adaptation module 218 additionally implements cognitive load management protocols, whereby information density, technical complexity, and feature disclosure are systematically modulated. The modulation may be achieved through progressive feature revelation, persona-specific terminology adaptation, and dynamic adjustment of learning pathways, all executed in accordance with cognitive processing parameters associated with specific user personas in the knowledge base 110A.

In an embodiment, the user experience adaptation module 218 further facilitates social and collaborative feature customization, wherein team interaction paradigms, communication protocols, and notification systems are dynamically adjusted based on collective user behavior patterns and team dynamics data stored in the knowledge base 110A. In facilitating social and collaborative features, the adaptive UI engine manages collaboration widget rendering, and the adaptive graphics engine implements shared three-dimensional workspace rendering through distributed scene graph management, real-time mesh deformation for multi-user object manipulation, and synchronized physics simulations for collaborative interactions.

In an embodiment, the user experience adaptation module 218 may facilitate emotional design elements, wherein communication tone, achievement systems, and aesthetic elements are systematically modified based on user emotional response data and preference patterns stored in the knowledge base 110A. In facilitating emotional design elements, the adaptive UI engine manages theme applications, and the adaptive graphics engine implements emotion-driven visual effects, executing dynamic atmospheric effects, volumetric lighting calculations, and real-time global illumination adjustments. The adaptive graphics engine further manages complex animation systems through skeletal animation, blend shapes, and procedural generation techniques.

The aforementioned adaptations may be continuously refined through real-time analysis of user interaction patterns, historical usage data, persona-specific preferences, contextual parameters, and performance metrics, thereby ensuring dynamic evolution of the user experience in alignment with user requirements and capabilities.

The input unit 222 may provide ports to receive input from input devices such as keypad, touch-sensitive display, camera (such as a camera receiving gesture-based inputs), etc. capable of receiving requests for identifying new personas, identifying patterns in the application data etc. The display unit 224 may provide ports to output data via output device with a graphical user interface for displaying insights from the knowledge base, new personas identified from the knowledge base 110A for downstream applications based on requirements. The bus 226 acts as interconnect between the one or more processing units 112, the memory 114, the one or more storage units 110, the input unit 222, the display unit 224, and a network interface 228.

The network interface 228 is configured to handle network connectivity, bandwidth, and network traffic with a data exchange network 230, which serves to establish communication between the computer 202 and the data labelling model 232, the attribution model 234, the semantic contextualisation model 236, and the one or more contextual intelligence models 238.

Those of ordinary skill in the art will appreciate that the architecture depicted in FIG 2 may vary for particular implementations. For example, other peripheral devices such as an optical disk drive and the like, Local Area Network (LAN) / Wide Area Network (WAN) / Wireless (e.g. Wi-Fi) adapter, graphics adapter, disk controller, input/output (I/O) adapter etc. may also be used in addition to or in place of the hardware depicted. The depicted example is provided for the purpose of explanation only and is not meant to imply architectural limitations with respect to the present disclosure.

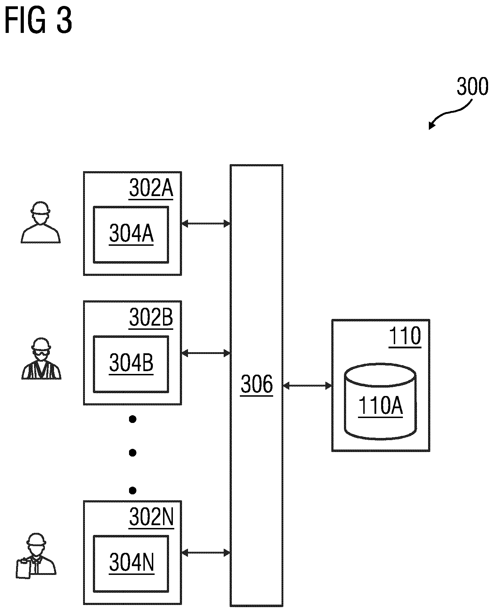

FIG 3 is a schematic diagram 300 illustrating a system architecture for rendering personalised user experiences in a multi-user setup with respect to the software application 102, according to an exemplary embodiment of the present disclosure. The diagram showcases coordination of personalised interfaces / views across multiple user devices 302A, 302B-N, facilitated by a deployment and synchronisation engine 306.

The deployment and synchronisation engine 306 is designed to address the complexities of managing and coordinating multiple components tailored for different views of the same application. In scenarios where multiple users interact with a shared application instance, the engine ensures that each user is presented with a personalised view dynamically adapted to their unique persona, preferences, and tasks. Although these personalised views operate within the same application instance, they are individually deployed on the respective user devices to provide a seamless and user-specific experience. To maintain consistency and coherence across the system, the deployment and synchronisation engine 306 is responsible for synchronizing user actions, interactions, and view orientations in real time, ensuring that all instances remain aligned and consistent regardless of concurrent user interactions. This functionality is critical in creating a responsive and adaptive multi-user environment.

In this scenario, user devices 302A, 302B-N represent individual devices operated by active users, each displaying a personalised view or interface 304A, 304B-N tailored to the specific persona of the active user interacting with the software application 102. The user devices 302A, 302B-N are individual computing devices operated by distinct active users. Across embodiments, the user devices 302A, 302B-N can be, but not limited to personal computers, laptops, virtual reality (VR) headsets, extended reality (XR) headsets, and similar computing devices.

The deployment and synchronisation engine 306 serves as the central component responsible for managing the distribution and alignment of these personalised views on each of the user devices 302A-N. The deployment and synchronisation engine 306 orchestrates the alignment and distribution of these personalised views based on the specific tasks of each active user, ensuring that their motivations, objectives, and tasks are catered to effectively within the software application 102 environment.

Furthermore, the deployment and synchronisation engine 306 is connected to one or more storage units 110 storing the knowledge base 110A. This knowledge base stores user interaction data and persona correlations, enabling the extraction of elements required for each active user's tasks. By mapping correlations between the personas of active users and the stored user interaction data, the deployment and synchronisation engine 306 regulates the delivery of personalised user experiences to each individual user, enhancing application state consistency and user data integrity.

Physically, the deployment and synchronisation engine 306 may comprise a combination of hardware components such as processors, memory units, networking interfaces, and other necessary components to execute the synchronisation and distribution tasks effectively. In terms of software implementation, the deployment and synchronisation engine 306 includes a set of programmed instructions or algorithms designed to manage the distribution and alignment of personalised views based on the personas of active users. These software components enable the engine 306 to interact with the user devices 302A-N, extract data from the knowledge base 110A, and synchronize user interactions and dynamic changes across the personalised views 304A-N.

In some embodiments, the deployment and synchronisation engine 306, as described herein, may be configured to interface with and support the user interface (UI) components during the creation and rendering of personalised views. The UI components can be delivered alongside the initial set of UI elements during the creation and loading of a scene within the software application 102. This approach ensures seamless integration of the deployment and synchronisation engine 306 into the UI generation and rendering process.

Unlike static views, which are pre-defined, the personalised views 304A-N generated by the deployment and synchronisation engine 306 are dynamic and constructed on-demand. During the generation process, a request originating from each user device (e.g., 302A, 302B-N) contains user-specific information. This user-specific information is utilized to generate an adaptive UI tailored to the persona, preferences, and tasks of the corresponding active user interacting with the software application 102.

Whenever an active user attempts to access the UI, the deployment and synchronisation engine 306 processes the incoming request in conjunction with static UI components and generates a custom view that is uniquely suited for the requesting user. Each custom-generated view is tagged with a unique identifier (e.g., user ID) corresponding to the active user for whom the view is generated. This tagging mechanism facilitates effective management and synchronisation of the personalised views across multiple user devices 302A-N.

In scenarios where the same scene is accessed by a user at a later time, the deployment and synchronisation engine 306 retrieves the previously cached version of the scene, thereby reducing the computational overhead associated with regenerating the custom UI. This caching mechanism optimizes system performance by minimizing latency and conserving processing resources.

Further, each UI component created within any personalised view is assigned a unique component ID. These components, while adaptive in nature and varying across users, are still instantiated as members of the same base class. For example, a "submit" button may differ in placement, size, or colour across personalised views but remains an instance of a common base class. The unique component ID associated with each UI element allows for precise tracking and synchronisation of user interactions. Specifically, any action performed by or on a UI component by an end user is communicated to other instances of the software application, ensuring that all instances are aware of the exact component interacted with by other users. This facilitates real-time synchronisation of user interactions across personalised views 304A-N, maintaining a coherent application state and preventing data inconsistencies.

The synchronisation functionality described above is an integral part of the deployment and synchronisation engine 306 and, in some embodiments, may be deployed directly onto the user device (e.g., 302A-N). This localized deployment enhances the responsiveness of the personalised UI and further streamlines the synchronisation of user interactions across multiple instances of the software application 102.

Advantageously, the deployment and synchronisation engine 306 enables seamless and efficient management of multiple personalised views, ensuring that each active user receives a consistent and accurate representation of the application state and user data. By leveraging the mapped correlations between the user personas and the user interaction data, the deployment and synchronisation engine 306 can optimize the distribution of personalised views 304A-N, reducing latency and improving overall system responsiveness. Furthermore, the synchronisation of user interactions and dynamic changes across multiple personalised views 304A-N ensures that the application state and user data remain coherent and up to date, thereby preventing data inconsistencies and errors that can arise from concurrent user interactions.

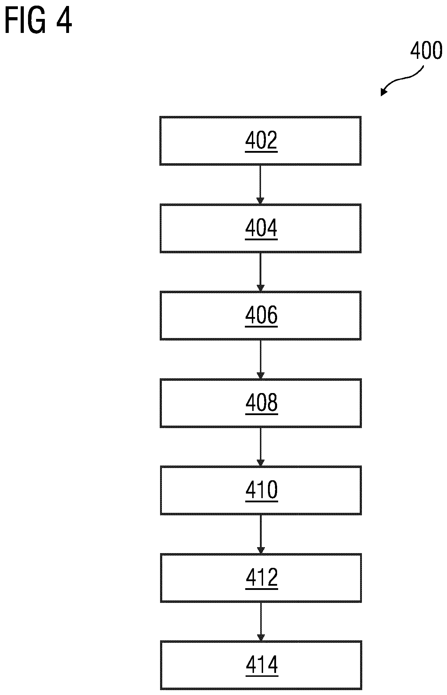

FIG 4 is a flow diagram of a computer-implemented method 400 for providing personalised user experience associated with the software application 102, according to an exemplary embodiment of the present disclosure.

At step 402, the method 400 involves receiving, by the one or more processing units 112, first data associated with the software application 102, comprising first application data. The first application data may include data elements pertaining to objects, UI components, and respective coordinates along with any associated actions of the objects and the UI components in the first application data.

At step 404, the method 400 involves receiving, by the one or more processing units 112, second data from the knowledge base 110A communicably coupled to the one or more processing units 112. The second data includes second application data associated with one or more source applications 106. According to an embodiment, the one or more source applications 106 includes the software application 102. The second application data pertains to objects, user interface (UI) components, and respective coordinates along with any associated actions of the objects and the UI components. The second data includes the persona data associated with the plurality of user personas and respective objectives and tasks. The second data further includes the user interaction data pertaining to interaction patterns of the plurality of user personas, and relationships between the plurality of user personas. The interaction patterns in the user interaction data may correspond to habitual user behaviours and preferences in navigating and interacting with elements displayed over a user interface.

According to an embodiment, the first data and the second data correspond to simulated data acquired from computer-simulated environments, such as but not limited to metaverse applications. According to an embodiment, the objects may be at least one of two-dimensional (2D) or three-dimensional (3D) objects. The objects may be configured to form part of spatial compositions that comprise at least one of two-dimensional (2D) compositions or three-dimensional (3D) compositions.

According to an embodiment, the method 400 further includes merging the first data with the second data in the knowledge base 110A to obtain a union data set. The union data set includes union application data pertaining to objects and user interface (UI) components, and respective coordinates along with any associated actions of the said objects and the said UI components. According to a further embodiment, prior to merging the first data with the second data, the method 400 involves comparing the first application data with the second application data to identify data elements in the first application data that are absent in the second application data. In this embodiment, merging the first data with the second data corresponds to merging the data elements in the first application data that are absent in the second application data.

According to an embodiment, the data elements in the union data set in the knowledge base may be labelled using the data labelling model 232. The data labelling model 232 is a machine learning model trained on previously labelled data comprising objects, UI components, personas, and relationships therebetween.

At step 406, the method 400 involves obtaining the active user information by the one or more processing units 112. The active user information includes at least one of a persona, one or more objectives, one or more tasks, or any combination thereof associated with each of one or more active users interacting with the software application 102.

According to an embodiment, the step 406 of obtaining active user information may involve determining, using the attribution model 234, at least one of the persona, the one or more objectives, or the one or more tasks of the persona of each active user based on corresponding user-interaction data associated with the software application. Alternatively, or in addition, obtaining active user information may involve receiving a selection from each active user, wherein the said selection corresponds to a selection of at least one of the persona, the one or more objectives, or the one or more tasks from one or more predefined lists. In a further embodiment, the attribution model may be a first machine learning model trained on previously labelled data pertaining to associations of user personas of the plurality of users with corresponding user interaction patterns.

At step 408, the method 400 involves determining one or more tasks to be performed by each active user to achieve the one or more objectives of the respective persona of each active user, by mapping the active user information with the persona data in the knowledge base 110A.

In an embodiment, the step 408 of determining the one or more tasks to be performed to achieve the one or more objectives of the persona of each active user may comprise performing semantic mapping, using the semantic contextualisation model 236, to correlate the active user information with the persona data in the knowledge base 110A. The semantic contextualisation model may be a machine learning model, such as a neural network or a graph-based model, trained on a large dataset of user interactions, personas, and objectives.

At step 410, the method 400 involves determining, for each active user, one or more elements from the knowledge base 110A for realization of the corresponding determined one or more tasks, and coordinates of said one or more elements based on a mapping of the persona of the corresponding active user with the user interaction data in the knowledge base 110A. The said one or more elements correspond to at least one of objects or UI components in the knowledge base 110A.

In an embodiment, for each active user, the one or more elements from the knowledge base 110A for realization of the corresponding determined one or more tasks and the coordinates of said one or more elements for user accessibility may be determined using the one or more contextual intelligence models 238.

The one or more contextual intelligence models 238 utilized in this context are trained on diverse data sources, including node learning data to identify objects, UI components, and their respective coordinates in the knowledge base through the application of graph theory and semantic analysis techniques. Additionally, actions learning data may be leveraged as training data for the one or more contextual intelligence models 238 to analyse actions and behaviours linked with the objects and the UI components in the knowledge base 110A, employing similar graph theory and semantic analysis methodologies. Interaction data may be employed as training data for the one or more contextual intelligence models 238 to recognize user behaviour within the software application, incorporating input methods, gesture recognition, and user feedback to understand the user interactions of different user personas with the objects and the UI components effectively. Furthermore, design comprehension data may be utilized as training data for the one or more contextual intelligence models 238 to identify UI elements constituting the UI components in the knowledge base using graph theory and semantic analysis techniques, aiding in understanding how the UI elements are structured to form various UI compositions. The first contextual understanding data may be utilized as training data for the one or more contextual intelligence models 238 to identify contextual information associated with the UI components by applying graph and scene analysis to the knowledge base, unveiling relationships regarding the positions of UI components, design choices, interactions facilitated by the UI components, and correlations among the UI components. Further, the second contextual understanding data may be employed as training data for the one or more contextual intelligence models 238 to analyse event logs, user behaviour patterns, object interactivity records, and temporal and spatial relationships between the objects and UI components in the knowledge base, utilizing graph theory and semantic analysis techniques for comprehensive insights.

At step 412, the method 400 involves generating metadata for each active user. The metadata pertains to the said determined one or more elements and coordinates of the one or more elements.

At step 414, the method 400 involves rendering a personalised user experience for each active user by extracting the corresponding determined one or more elements from the knowledge base and positioning said one or more elements according to the corresponding metadata.

In an embodiment, the step 414 of rendering a personalised user experience for each active user may comprise generating a customized layout and arrangement of the objects and the UI components from the knowledge base 110A corresponding to the respective metadata, based on user interaction patterns and preferences of the persona of the corresponding active user during an active user session with the software application 102. This customized layout and arrangement can be tailored to meet the unique needs and preferences of each active user, providing an optimized and intuitive user experience. Advantageously, this approach enables increased user engagement, improved productivity, and enhanced overall satisfaction with the software application, while also reducing the likelihood of user frustration and errors. The personalised user experience can also foster a sense of familiarity and comfort, leading to increased user loyalty and retention.

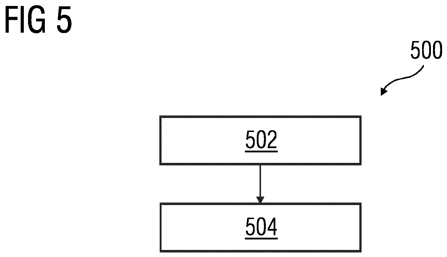

FIG 5 is a flow diagram illustrating a method 500 for updating new user personas in a knowledge base 110A associated with the software application 102, according to an exemplary embodiment of the present disclosure.

At step 502, the method 500 involves identifying, by the one or more processing units 112, one or more new user personas based on interaction patterns of the one or more active users.

This identification process may be performed using various machine learning algorithms and techniques, such as clustering, decision trees, and neural networks, which are designed to analyse the interaction patterns of the active users and identify patterns and trends that are indicative of new user personas. The one or more processing units 112 may receive input data from various sources, including but not limited to, user interaction data, user feedback, and user behaviour data, which are stored in the knowledge base 110A. This input data may include information such as user clicks, user navigation patterns, user search queries, and user ratings, which are used to identify patterns and trends in user behaviour.

The one or more processing units 112 may then apply machine learning algorithms to the input data to identify clusters of users who exhibit similar interaction patterns. These clusters may be identified based on various factors, including but not limited to, user demographics, user behaviour, and user preferences. Once the clusters are identified, the one or more processing units 112 may analyse the interaction patterns of the users within each cluster to identify common characteristics and traits that define each cluster. These characteristics and traits may include information such as user goals, user motivations, and user pain points, which are used to create a persona profile for each cluster. The persona profile may include information such as user demographics, user behaviour patterns, user preferences, and user goals, which are used to define the user persona. The persona profile may also include information such as user interaction patterns, user navigation patterns, and user search queries, which are used to identify the user's interests and needs.

At step 504, the method 500 involves updating, by the one or more processing units 112, the one or more new user personas in the persona data and the corresponding interaction patterns in the user-interaction data in the knowledge base 110A. Based on the persona profile, the one or more processing units 112 may update the persona data and the corresponding interaction patterns in the user-interaction data in the knowledge base 110A. This update process may involve adding new persona profiles and/or updating existing persona profiles. In another embodiment, persona profiles that are no longer relevant in context of the domain of the software application may be archived.

The updated persona data and interaction patterns may then be used to improve the personalised user experience for the one or more active users. The one or more processing units 112 may use the updated persona data and interaction patterns to identify the most relevant content, features, and functionality for each user, and to provide personalised recommendations and suggestions to each user. Additionally, the one or more processing units 112 may use the newly identified user personas to identify areas of the application that require improvement, and to prioritize development of new features and functionality that meet the needs of the new user personas.

In a further embodiment, the one or more processing units 112 may also use the new user personas to improve the application's user interface and user experience. For example, the one or more processing units 112 may use the new user personas to identify the most common user tasks and workflows, and to design the user interface and user experience to meet the needs of those tasks and workflows.

The use of new user personas to improve the user experience may also involve using various analytics and metrics to measure the effectiveness of the personalised user experience. For example, the one or more processing units 112 may use metrics such as user engagement, user satisfaction, and user retention to measure the effectiveness of the personalised user experience, and to identify areas for improvement.

In addition to using analytics and metrics, the one or more processing units 112 may also use various machine learning algorithms and techniques to continuously improve the personalised user experience. For example, the one or more processing units 112 may use reinforcement learning algorithms to learn from user feedback and behaviour, and to adapt the personalised user experience to meet the changing needs and preferences of the users. The use of machine learning algorithms and techniques to continuously improve the personalised user experience may also involve using various data sources, including but not limited to, user interaction data, user feedback, and user behaviour data.

Advantageously, this approach enables the software application 102 to continuously learn and adapt to evolving user behaviours and preferences, ensuring that the personalised user experiences remain accurate and effective over time. The ability to identify new user personas and update the knowledge base 110A accordingly also allows for improved scalability and flexibility, enabling the software application 102 to accommodate a diverse range of users and use cases. Furthermore, this approach can lead to enhanced overall user satisfaction and engagement with the software application 102, as users are provided with more accurate and personalised experiences.

According to a further embodiment, the computer-implemented method 400 may further comprise utilizing the deployment and synchronisation engine 306 to manage distribution and alignment of a plurality of personalised views 304A-N on individual user devices 302A-N when multiple active users are simultaneously interacting with the software application 102, based on mapped correlations between the persona of each active user and the user interaction data stored in the knowledge base 110A. The deployment and synchronisation engine 306 may also synchronize user interactions and dynamic changes across the plurality of personalised views 304A-N, thereby maintaining consistency in application state and user data associated with the software application 102. For example, in a scene, for a left-handed engineer, a turning handle might appear on a different side than for a right-handed engineer. The deployment and synchronisation engine 306 is responsible for handling these views. Advantageously, this embodiment enables seamless and efficient management of multiple personalised views 304A-N, ensuring that each active user receives a consistent and accurate representation of the application state and user data.

Advantageously, the computer-implemented method and system of the present disclosure provide a significant improvement over existing solutions by addressing the limitations and challenges associated with current software design. The method and system of present disclosure enable adaptation of user interface components and application elements in response to individual user needs, establishing and managing dynamic relationships between users and application features, and automating the process of personalizing user experiences based on individual user context, preferences, and needs.

Unlike existing solutions, which are limited by rigid, predefined frameworks that fail to accommodate diverse user needs, the method and system present disclosure provides a flexible and adaptive approach that can dynamically adjust to changing user requirements. This is particularly important in platforms, such as industrial metaverse applications, industrial design software and low-code development environments, where users with diverse needs must interact with complex systems and interfaces. The present disclosure also addresses the lack of inclusivity in current software design, which can result in a poor user experience for users with diverse physical and cognitive abilities. By providing a personalised and adaptive user interface, the present disclosure can accommodate the unique needs and preferences of individual users, including those with physical or cognitive disabilities.

Furthermore, implementation of the method and the system of the present disclosure can overcome the technical complexity of establishing and managing dynamic relationships between users and virtual elements in metaverse applications. The automated mechanisms for adapting virtual environments based on user context and preferences eliminate the need for repetitive engineering efforts, reduce development costs, and result in faster time-to-market for new features.

In addition, the present disclosure provides a scalable and flexible solution that can be applied to a wide range of virtual environments and applications, including industrial metaverse applications, product design applications, and low-code development applications, among others. This enables developers and designers to create more effective and engaging user experiences, while also reducing the time and cost associated with developing and testing adaptive user interfaces.

Moreover, the present disclosure provides a more nuanced and effective adaptation of the user interface, resulting in a more seamless and intuitive user experience. The use of interaction patterns to ensure that the adaptive user interface is consistent with the design system of the virtual environment further enhances the user experience, providing a sense of familiarity and comfort that leads to increased user retention.

Overall, the method and system of the present disclosure provide a significant improvement over existing solutions, enabling increased efficiency, improved user experience, and increased consistency in the adaptive user interface, while also reducing development costs and the risk of human errors while interacting with the software application. By addressing the limitations and challenges associated with current software design, the method and system of the present disclosure provide for a more personalised, user-friendly, and consistent user experience, leading to increased user satisfaction and engagement.

The present disclosure may take the form of a computer program product comprising program modules accessible from computer-usable or computer-readable medium storing program code for use by or in connection with one or more computers, one or more processing units, or instruction execution systems. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation medium. The one or more processing units and program codes for implementing each aspect of the present disclosure may be centralized or distributed (or a combination thereof).

The present disclosure may take the form of a computer-readable storage medium comprising instructions which, when executed by the processing unit, cause the processing unit to perform the method steps described hereinabove. The computer-readable storage medium may include, but not be limited to, a portable computer diskette, a hard disk, a random-access memory (RAM) device, a read-only memory (ROM) device, an erasable programmable read-only memory (EPROM or Flash memory) device, a portable compact disc read-only memory (CDROM), an optical storage device, and a magnetic storage device.

Those skilled in the art will recognize that, unless specifically indicated or required by the sequence of operations, certain steps in the processes described above may be omitted, performed concurrently or sequentially, or performed in a different order.

While the present disclosure has been described in detail with reference to certain embodiments, it should be appreciated that the present disclosure is not limited to those embodiments. The foregoing examples have been provided merely for the purpose of explanation and are in no way to be construed as limiting of the present disclosure disclosed herein. While the system and the method of the present disclosure have been described with reference to various embodiments, it is understood that the words used herein are words of description and illustration, rather than words of limitation. Furthermore, although the disclosure has been described with reference to particular means, materials, and embodiments, it is not intended to be limited to the specifics disclosed herein; rather, it extends to all functionally equivalent structures, methods, and uses within the scope of the appended claims. Those skilled in the art, having the benefit of the teachings of this specification, may effect numerous modifications and changes without departing from the scope of the disclosure in its aspects.

### List of References

- 100: System for providing personalised user experience associated with a software application
- 102: Software application
- 104: One or more data acquisition devices
- 106: One or more source applications
- 108: Network
- 110: One or more storage units
- 110A: Knowledge base
- 112: One or more processing units
- 114: Memory
- 200: Exemplary architecture for providing personalized user experience associated with the software application
- 202: Computer
- 206: Module package
- 208: Data acquisition module
- 210: Task determination module
- 212: Element selection module
- 214: Spatial configurator module
- 216: Metadata generation module
- 218: User experience adaptation module
- 222: Input unit
- 224: Display unit
- 226: Bus
- 228: Network interface
- 230: Data exchange network
- 232: Data labelling model
- 234: Attribution model
- 236: Semantic contextualisation model
- 238: One or more contextual intelligence models
- 300: Schematic diagram illustrating a system architecture for rendering personalized user experiences in a multi-user setup
- 302A, 302B-N: User devices
- 304A, 304B-N: Personalised views
- 306: Deployment and synchronisation engine
- 400: Method for providing personalised user experience associated with a software application
- 402, 404, 406, 408, 410, 412, 414: Method steps
- 500: Method for updating new user personas in the knowledge base
- 502, 504: Method steps

## Claims

1. A computer-implemented method (400) for providing personalised user experience associated with a software application (102), the computer-implemented method (400) **characterized by**:
receiving (402), by one or more processing units (112), first data associated with the software application (102), comprising first application data;
receiving (404) second data from a knowledge base (110A) communicably coupled to the one or more processing units (112), the second data comprising:
second application data associated with one or more source applications (106), the second application data pertaining to objects, user interface (UI) components, and respective coordinates along with any associated actions thereof,
persona data associated with a plurality of user personas and respective objectives and tasks, and
user interaction data pertaining to interaction patterns of the plurality of user personas, and relationships therebetween;
obtaining (406) active user information including at least one of a persona, one or more objectives, one or more tasks, or any combination thereof associated with each of one or more active users interacting with the software application (102);
determining (408) one or more tasks to be performed by each active user to achieve the one or more objectives of the respective persona of each active user, by mapping the active user information with the persona data in the knowledge base (110A);
determining (410), for each active user, one or more elements from the knowledge base (110A) for realisation of the corresponding determined one or more tasks, and
coordinates of said one or more elements based on a mapping of the persona of the corresponding active user with the user interaction data, wherein said one or more elements correspond to at least one of objects or UI components in the knowledge base (110A);
generating (412) metadata for each active user, the metadata pertaining to said determined one or more elements and coordinates thereof; and
rendering (414) a personalised user experience for each active user by extracting the corresponding determined one or more elements from the knowledge base (110A) and positioning said one or more elements according to the corresponding metadata.

2. The computer-implemented method (400) according to claim 1, wherein the first application data comprises data elements pertaining to objects, UI components, and respective coordinates along with any associated actions thereof.

3. The computer-implemented method (400) according to claim 1 or claim 2, wherein the one or more source applications (106) comprises the software application (102).

4. The computer-implemented method (400) according to any one of the preceding claims, wherein the objects are at least one of two-dimensional or three-dimensional objects, the objects being configured to form part of spatial compositions that comprise at least one of two-dimensional compositions or three-dimensional compositions.

5. The computer-implemented method (400) according to any one of the preceding claims, further comprising:
merging the first data with the second data in the knowledge base (110A) to obtain a union data set, the union data set comprising union application data pertaining to objects and user interface (UI) components, and respective coordinates along with any associated actions thereof.

6. The computer-implemented method (400) according to claim 5, wherein prior to merging the first data with the second data, the method comprises comparing the first application data with the second application data to identify data elements in the first application data that are absent in the second application data, and
wherein merging the first data with the second data corresponds to merging the data elements in the first application data that are absent in the second application data.

7. The method (400) according to claim 5 or claim 6, wherein data elements in the union data set in the knowledge base (110A) are labelled using a data labelling model (232), the data labelling model being a machine learning model trained on previously labelled data comprising objects, UI components, personas, and relationships therebetween.

8. The computer-implemented method (400) according to any one of the preceding claims, further comprising:
identifying (502), by the one or more processing units, one or more new user personas based on interaction patterns of the one or more active users; and
updating (504), by the one or more processing units, the one or more new user personas in the persona data and the corresponding interaction patterns in the user-interaction data in the knowledge base.

9. The computer-implemented method (400) according to any one of the preceding claims, wherein obtaining active user information comprises at least one of:
determining, using an attribution model (234), at least one of the persona, the one or more objectives, or the one or more tasks of the persona of each active user based on corresponding user-interaction data associated with the software application (102); or
receiving a selection from each active user, wherein the said selection corresponds to a selection of at least one of the persona, the one or more objectives, or the one or more tasks from one or more predefined lists.

10. The computer-implemented method (400) according to claim 9, wherein the attribution model (234) is a machine learning model trained on previously labelled data pertaining to associations of user personas of the plurality of users with corresponding user interaction patterns.

11. The computer-implemented method (400) according to any one of the preceding claims, wherein determining the one or more tasks to be performed to achieve the one or more objectives of the persona of each active user comprises performing semantic mapping, using a semantic contextualisation model (236), to correlate the active user information with the persona data in the knowledge base (110A).

12. The computer-implemented method (400) according to any one of the preceding claims, wherein for each active user, the one or more elements from the knowledge base (110A) for realization of the corresponding determined one or more tasks and the coordinates of said one or more elements are determined using one or more contextual intelligence models (238), the one or more contextual intelligence models (238) being machine learning models trained on one or more of:
node learning data for identifying the objects, the UI components, and respective coordinates in the knowledge base (110A);
actions learning data for analysing actions and behaviours associated with the objects and the UI components in the knowledge base (110A);
interaction data for identifying user behaviour with the software application, including one or more of user input methods, user interaction patterns, or user feedback to learn user interactions with the objects and the UI components in the knowledge base (110A);
design comprehension data for identifying UI elements that form part of the UI components in the knowledge base (110A) and design structures associated therewith for creating UI compositions;
first contextual understanding data for identifying contextual information associated with the UI components in the knowledge base (110A), including design choices of the UI components, interactions provided by the UI components, relative positions of the UI components, and correlations between the UI components; or
second contextual understanding data for analysing event logs, object interactivity records, temporal and spatial relationships between the objects and the UI components in the knowledge base (110A).

13. The computer-implemented method (400) according to any one of the preceding claims, wherein rendering personalised user experience for each active user comprises:
generating a customized layout and arrangement of the objects and the UI components from the knowledge base (110A) corresponding to the respective metadata, based on user interaction patterns and preferences of the persona of the corresponding active user during an active user session with the software application (102).

14. The computer-implemented method (400) according to any one of the preceding claims, further comprising utilizing a deployment and synchronisation engine (306) to:
manage distribution and alignment of a plurality of personalised views (304A-N) on individual user devices (302A-N) when multiple active users are simultaneously interacting with the software application, based on mapped correlations between the persona of each active user and the user interaction data stored in the knowledge base (110A); and
synchronize user interactions and dynamic changes across the plurality of personalised views (304A-N), thereby maintaining consistency in application state and user data associated with the software application (102).

15. A system (100) for providing personalised user experience associated with a software application (102), the apparatus comprising:
one or more storage units (110) for storing a knowledge base (112);
one or more processing units (112) communicably coupled to the one or more storage units (110); and
a memory (114) communicatively coupled to the one or more processing units (112), the memory (114) comprising one or more modules stored in the form of machine-readable instructions executable by the one or more processing units, wherein the one or more modules are configured to perform a method (400) according to any one of claims 1 to 14.

16. A computer-program product having computer-readable instructions stored therein, that when executed by one or more processing units (112), causes the one or more processing units (112) to perform a method according to any one of claims 1 to 14.

17. A computer readable medium on which program code sections of a computer program are saved, the program code sections being loadable into and/or executable in a system to make the system execute the method steps according to any one of claims 1 to 14 when the program code sections are executed in the system.
